(19) Europäisches Patentamt
European Patent Office
Office européen des brevets

(11) EP 3 816 233 A1

(12) **EUROPEAN PATENT APPLICATION**
published in accordance with Art. 153(4) EPC

(43) Date of publication:
**05.05.2021 Bulletin 2021/18**

(21) Application number: **19825373.4**

(22) Date of filing: **11.06.2019**

(51) Int Cl.:
***C08L 83/10*** *(2006.01)* ***C08G 77/442*** *(2006.01)*
***C08G 81/02*** *(2006.01)* ***C09D 183/10*** *(2006.01)*

(86) International application number:
**PCT/JP2019/023041**

(87) International publication number:
**WO 2020/004001 (02.01.2020 Gazette 2020/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.06.2018 JP 2018123045**

(71) Applicant: **DIC Corporation**
**Tokyo 174-8520 (JP)**

(72) Inventor: **KIRISAWA, Rie**
**Takaishi-shi, Osaka 592-0001 (JP)**

(74) Representative: **Gerauer, Marc Philippé et al**
**Kraus & Weisert**
**Patentanwälte PartGmbB**
**Thomas-Wimmer-Ring 15**
**DE-80539 München (DE)**

# (54) AQUEOUS RESIN COMPOSITION, COATING AGENT, AND ARTICLE

(57) Provided is an aqueous resin composition having a composite resin (ABC) dissolved or dispersed in an aqueous medium, and further containing a plasticizer (D), the composite resin (ABC) having a polysiloxane segment (B) and a polysiloxane segment (C) which are bonded through a silicon-oxygen bond, wherein the polysiloxane segment (B) is present in a composite resin (AB) having a polymer segment (A) having a neutralized acid group and the polysiloxane segment (B), which are chemically bonded to each other, and the polysiloxane segment (C) is derived from a condensation product (c) of an alkyltrialkoxysilane having an alkyl group having 1 to 3 carbon atoms, wherein the content of the total of the polysiloxane segment (B) and the polysiloxane segment (C) in the composite resin (ABC) is 15 to 85% by mass. The aqueous resin composition of the invention can form a coating film which is excellent in appearance of the coating film, adhesion to a substrate, hot-water resistance, solvent resistance, weathering resistance, stain resistance, and substrate followability, and therefore can be advantageously used as a coating agent.

EP 3 816 233 A1

## Description

### Technical Field

The present invention relates to an aqueous resin composition, a coating agent, and an article having a cured coating film of the coating agent.

### Background Art

Recently, the development of highly functional materials having both properties of an inorganic material and those of an organic material is being made in a wide variety of fields of industry, and it has generally been known that an inorganic material is excellent in durability, such as a weathering resistance, a heat resistance, and a marring resistance, and an organic material has excellent flexibility and excellent processability. Under the circumstances, an aqueous resin comprising a composite of an inorganic material and an organic material has been proposed (see, for example, PTL 1). A coating film obtained from this aqueous resin is relatively hard, and therefore, when used in coating of the surface of a substrate which easily suffers deformation or stretching due to external force, a change of temperature, or the like, it is likely that the coating film cannot follow deformation or the like of the substrate, so that the coating film is peeled or bent, causing the formation of cracks and the like.

Therefore, there has been desired a material capable of forming a coating film which is not only excellent in durability, such as a weathering resistance, but also excellent in substrate followability.

### Citation List

### Patent Literature

PTL 1: JP-A-11-279408

### Summary of Invention

### Technical Problem

A task to be achieved by the present invention is to provide an aqueous resin composition that can form a coating film which is excellent in appearance of the coating film, adhesion to a substrate, water resistance, hot-water resistance, solvent resistance, weathering resistance, stain resistance, and substrate followability.

### Solution to Problem

The present inventors have conducted extensive and intensive studies with a view toward solving the above-mentioned problems. As a result, it has been found that an aqueous resin composition having a specific composite resin dissolved or dispersed and containing a plasticizer can form a coating film which is excellent in appearance of the coating film, adhesion to a substrate, water resistance, hot-water resistance, solvent resistance, weathering resistance, stain resistance, bleed resistance, and substrate followability, and the present invention has been completed.

Specifically, the present invention is directed to an aqueous resin composition having a composite resin (ABC) dissolved or dispersed in an aqueous medium, and further containing a plasticizer (D), the composite resin (ABC) having a polysiloxane segment (B) and a polysiloxane segment (C) which are bonded through a silicon-oxygen bond, wherein the polysiloxane segment (B) is present in a composite resin (AB) having a polymer segment (A) having a neutralized acid group and the polysiloxane segment (B), which are chemically bonded to each other, and the polysiloxane segment (C) is derived from a condensation product (c) of an alkyltrialkoxysilane having an alkyl group having 1 to 3 carbon atoms, wherein the content of the total of the polysiloxane segment (B) and the polysiloxane segment (C) in the composite resin (ABC) is 15 to 85% by mass.

### Advantageous Effects of Invention

The aqueous resin composition of the invention is advantageous in that a coating film which is excellent in various physical properties including a weathering resistance and substrate followability can be formed from the composition, and therefore can be advantageously used as a coating agent for, for example, building members for an outer wall, a roof, a film structure, and the like; civil engineering members for a guardrail, a sound barrier, a drainage conduit, and the like; metal substrates, e.g., plated steel plates used in parts for household appliances, industrial machines, and

automobiles, and the like, such as a zinc-placed steel plate and an aluminum-zinc alloy steel plate, an aluminum plate, an aluminum alloy plate, an electromagnetic steel plate, a copper plate, and a stainless steel plate; and plastic products and fabric for a cellular phone, household appliances, office automation machines, and interior automotive trims. Description of Embodiments

The aqueous resin composition of the present invention is an aqueous resin composition having a composite resin (ABC) dissolved or dispersed in an aqueous medium, and further containing a plasticizer (D), wherein the composite resin (ABC) has a polysiloxane segment (B) and a polysiloxane segment (C) which are bonded through a silicon-oxygen bond, wherein the polysiloxane segment (B) is present in a composite resin (AB) having a polymer segment (A) having a neutralized acid group and the polysiloxane segment (B), which are chemically bonded to each other, and the polysiloxane segment (C) is derived from a condensation product (c) of an alkyltrialkoxysilane having an alkyl group having 1 to 3 carbon atoms, wherein the content of the total of the polysiloxane segment (B) and the polysiloxane segment (C) in the composite resin (ABC) is 15 to 85% by mass.

The composite resin (ABC) is first described. The composite resin (ABC) has a polysiloxane segment (B) and a polysiloxane segment (C) which are bonded through a silicon-oxygen bond, wherein the polysiloxane segment (B) is present in a composite resin (AB) having a polymer segment (A) having a neutralized acid group and the polysiloxane segment (B), which are chemically bonded to each other, and the polysiloxane segment (C) is derived from a condensation product (c) of an alkyltrialkoxysilane having an alkyl group having 1 to 3 carbon atoms.

Examples of the composite resins (ABC) include a composite resin having a structure such that a polysiloxane segment (B) and a polysiloxane segment (C) are chemically bonded through a silicon-oxygen bond, wherein the polysiloxane segment (B) is present in a composite resin having a graft structure in which the polysiloxane segment (B) is chemically bonded to a side chain of a polymer segment (A) having a neutralized acid group, or a composite resin having a block structure in which the polysiloxane segment (B) is chemically bonded to an end of the above polymer segment (A), and the polysiloxane segment (C) is derived from a condensation product (c) of an alkyltrialkoxysilane having an alkyl group having 1 to 3 carbon atoms.

With respect to the chemical bond between the polymer segment (A) and the polysiloxane segment (B) in the composite resin (ABC), for example, there can be mentioned a bonding represented by the general formula (3) or (4) below, and especially, a composite resin having a bonding of the general formula (3) is preferably used because a coating film having excellent weathering resistance can be formed.

[Chem. 1]

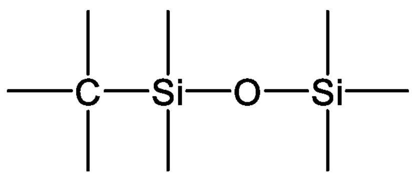

(3)

Wherein, in the general formula (3), the carbon atom constitutes a part of the polymer segment (A), and the silicon atom and oxygen atom constitute a part of the polysiloxane segment (B).

[Chem. 2]

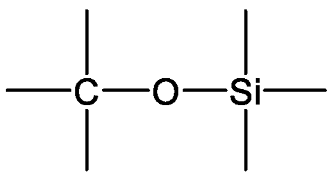

(4)

Wherein, in the general formula (4), the carbon atom constitutes a part of the polymer segment (A), and the silicon atom and oxygen atom constitute a part of the polysiloxane segment (B).

For dispersing or dissolving the composite resin (ABC) in an aqueous medium, it is necessary that the polymer segment (A) be a polymer segment having a neutralized acid group, and especially, the polymer segment (A) is preferably a polymer segment derived from a polymer (a') having an acid group and a hydroxyl group bonded to a silicon atom and/or a hydrolyzable group bonded to a silicon atom (hereinafter, referred to simply as "silicon atom-bonded hydroxyl group and/or hydrolyzable group") or a polymer (a) which is the neutralized polymer (a') because such a polymer segment easily undergoes hydrolysis condensation, together with the hydroxyl group bonded to a silicon atom or hydrolyzable

group bonded to a silicon atom of the polysiloxane segment (B) or a synthesis raw material therefor, so that the polymer segment is chemically bonded to the polysiloxane segment (B) through a bonding of the general formula (3) above. The polymer (a') and polymer (a) can be any polymer having an acid group or a neutralized acid group, which is other than a polysiloxane, and examples of types of polymers include vinyl polymers, such as an acrylic polymer, a fluoroolefin polymer, a vinyl ester polymer, an aromatic vinyl polymer, and a polyolefin polymer, a polyester polymer, and a polyether polymer, but, of these, vinyl polymers are preferred, and an acrylic polymer is more preferred.

Examples of the acid groups in the polymer (a') include a carboxyl group, a phosphoric acid group, an acid phosphate group, a phosphorous acid group, a sulfonic acid group, and a sulfinic acid group. Of these, a carboxyl group is preferred because it can be easily introduced into the skeleton of the composite resin (ABC).

As a basic compound used for neutralizing such an acid group, for example, there can be used an organic amine compound, such as methylamine, dimethylamine, trimethylamine, ethylamine, diethylamine, triethylamine, 2-aminoethanol, or 2-dimethylaminoethanol; an inorganic basic compound, such as ammonia, sodium hydroxide, or potassium hydroxide; or a quaternary ammonium hydroxide, such as tetramethylammonium hydroxide, tetra-n-butylammonium hydroxide, or trimethylbenzylammonium hydroxide, and, of these, an organic amine compound or ammonia (aqueous ammonia) is preferably used.

From the viewpoint of maintaining excellent storage stability of the aqueous dispersion or aqueous solution having the composite resin (ABC) dispersed or dissolved in an aqueous medium, the amount of the neutralized acid group in the polymer (a) is preferably 0.1 to 20 parts by mass, more preferably 0.2 to 10 parts by mass, relative to 100 parts by mass of the composite resin (ABC).

Further, the hydrolyzable group bonded to a silicon atom in the polymer (a') may be any functional group as long as it is a functional group capable of being hydrolyzed to form a hydroxyl group bonded to a silicon atom (silanol group), and examples of such functional groups include a halogen atom bonded to a silicon atom, an alkoxy group bonded to a silicon atom, an acyloxy group bonded to a silicon atom, a phenoxy group bonded to a silicon atom, a mercapto group bonded to a silicon atom, an amino group bonded to a silicon atom, an amide group bonded to a silicon atom, an aminoxy group bonded to a silicon atom, an iminoxy group bonded to a silicon atom, and an alkenyloxy group bonded to a silicon atom. Of these, from the viewpoint of causing the hydrolysis reaction to smoothly proceed and facilitating removal of a side product after the reaction, an alkoxy group bonded to a silicon atom is preferred.

The polymer segment (A) may have an additional functional group other than the neutralized acid group, the hydroxyl group bonded to a silicon atom, and the hydrolyzable group bonded to a silicon atom in such a range of amount that the effects of the invention are not sacrificed. Examples of such additional functional groups include a carboxyl group which is not neutralized, a blocked carboxyl group, a carboxylic anhydride group, a hydroxyl group, a blocked hydroxyl group, a cyclocarbonate group, an epoxy group, a carbonyl group, a primary amide group, a secondary amide group, a carbamate group, a polyethylene glycol group, a polypropylene glycol group, and a group represented by the following general formula (5).

[Chem. 3]

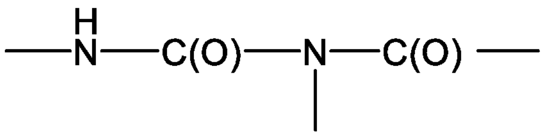

(5)

With respect to the polysiloxane segment (B) constituting the composite resin (ABC), for example, there can be mentioned a segment derived from a polysiloxane having a silicon atom-bonded hydroxyl group and/or hydrolyzable group. As examples of the hydrolyzable group bonded to a silicon atom, there can be mentioned hydrolyzable groups bonded to a silicon atom similar to those mentioned above in connection with the polymer segment (A), and preferred examples are also similar to those mentioned above.

The polysiloxane segment (B) is especially preferably a polysiloxane segment having a structure represented by the general formula (1) or (2) below. The polysiloxane segment having a structure represented by the general formula (1) or (2) below has a three-dimensional network polysiloxane structure, and therefore a coating film obtained from the resultant composition is excellent in solvent resistance, weathering resistance, and the like.

[Chem. 4]

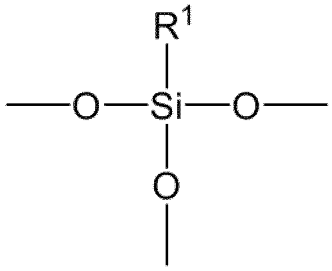

( 1 )

[Chem. 5]

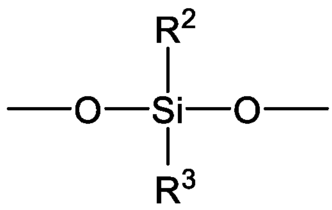

( 2 )

Wherein, in the general formulae (1) and (2), $R^1$ is an organic group having 4 to 12 carbon atoms and being bonded to the silicon atom, and each of $R^2$ and $R^3$ is independently a methyl group bonded to the silicon atom or an ethyl group bonded to the silicon atom; $R^1$ is preferably a hydrocarbon group having 4 to 12 carbon atoms and being bonded to the silicon atom, more preferably a phenyl group or an alkyl group having 4 carbon atoms, and each of $R^2$ and $R^3$ is preferably a methyl group bonded to the silicon atom or an ethyl group bonded to the silicon atom, more preferably a methyl group bonded to the silicon atom.

With respect to the polysiloxane segment having a structure represented by the general formula (1) or (2), there can be mentioned a segment derived from a polysiloxane which is obtained by subjecting to hydrolysis condensation an organoalkoxysilane, preferably a monoorganotrialkoxysilane having an organic group having 4 to 12 carbon atoms and being bonded to the silicon atom (hereinafter, referred to simply as "silicon atom-bonded organic group having 4 to 12 carbon atoms") and/or a diorganodialkoxysilane having two groups, i.e., a methyl group(s) bonded to the silicon atom and/or an ethyl group(s) bonded to the silicon atom (hereinafter, referred to simply as "silicon atom-bonded methyl group and/or ethyl group") . The above polysiloxane segment has a silicon atom-bonded organic group having 4 to 12 carbon atoms and a silicon atom-bonded hydroxyl group and/or hydrolyzable group, and/or two silicon atom-bonded methyl group(s) and/or ethyl group(s) and a silicon atom-bonded hydroxyl group and/or hydrolyzable group, and may have any of linear, branched, and cyclic structures.

Examples of the silicon atom-bonded organic groups having 4 to 12 carbon atoms include an alkyl group, a cycloalkyl group, an aryl group, and an aralkyl group, each having 4 to 12 carbon atoms and being bonded to the silicon atom. These organic groups may have a substituent.

The silicon atom-bonded organic group having 4 to 12 carbon atoms is preferably a hydrocarbon group bonded to the silicon atom, and examples of such hydrocarbon groups include alkyl groups, such as a n-butyl group, an iso-butyl group, a n-hexyl group, a n-octyl group, a n-dodecyl group, and a cyclohexylmethyl group; cycloalkyl groups, such as a cyclohexyl group and a 4-methylcyclohexyl group; aryl groups, such as a phenyl group and a 4-methylphenyl group; and aralkyl groups, such as a benzyl group, wherein each group is bonded to the silicon atom. Of these, more preferred is a phenyl group bonded to the silicon atom or an alkyl group having 4 carbon atoms and being bonded to the silicon atom.

The polysiloxane segment (C) constituting the composite resin (ABC) is a segment derived from a condensation product (c) of an alkyltrialkoxysilane having an alkyl group having 1 to 3 carbon atoms, and the condensation product (c) of an alkyltrialkoxysilane having an alkyl group having 1 to 3 carbon atoms used in the invention has a hydroxyl group bonded to a silicon atom and/or an alkoxy group bonded to a silicon atom.

The condensation product (c) of alkyltrialkoxysilane preferably has a structure represented by the general formula (6) below. The polysiloxane segment derived from the condensation product of alkyltrialkoxysilane having a structure represented by the general formula (6) below has a three-dimensional network polysiloxane structure, and therefore a coating film obtained from the resultant composition is excellent in solvent resistance, weathering resistance, and the like.

[Chem. 6]

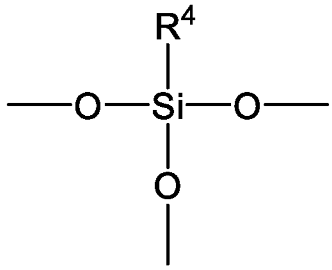

(6)

Wherein, in the general formula (6), $R^4$ is an alkyl group having 1 to 3 carbon atoms.

With respect to the composite resin (ABC), in view of further improving the substrate followability while maintaining durability, such as a weathering resistance and a stain resistance, the total amount (B + C) of the polysiloxane segment (B) and the polysiloxane segment (C) derived from the condensation product (c) of alkyltrialkoxysilane is preferably 15 to 85 parts by mass, more preferably 25 to 65 parts by mass, relative to 100 parts by mass of the composite resin (ABC).

Further, with respect to the composite resin (ABC), in view of further improving the substrate followability while maintaining durability, such as a weathering resistance and a stain resistance, the amount of the polysiloxane segment (C) derived from the condensation product (c) of alkyltrialkoxysilane is preferably 10 to 60 parts by mass, more preferably 20 to 50 parts by mass, relative to 100 parts by mass of the composite resin (ABC).

The composite resin (ABC) can be produced by various methods, but is especially preferably produced by a process comprising the following production steps (I) and (II).

The production step (I) is a step in which a polymer (a') having both an acid group and a silicon atom-bonded hydroxyl group and/or hydrolyzable group and an organoalkoxysilane (b) and/or a hydrolysis condensation product thereof (b-1) are subjected to hydrolysis condensation to obtain a composite resin (A'B) having a polymer segment (A') derived from the polymer (a') and a polysiloxane segment (B) derived from the organoalkoxysilane (b), which are chemically bonded to each other.

The production step (II) is a step in which the obtained composite resin (A'B) and a condensation product (c) of an alkyltrialkoxysilane having an alkyl group having 1 to 3 carbon atoms are subjected to hydrolysis condensation to obtain a composite resin (A'BC) having the polysiloxane segment (B) of the composite resin (A'B) and a polysiloxane segment (C) derived from the condensation product (c) of alkyltrialkoxysilane having an alkyl group having 1 to 3 carbon atoms, which segments are bonded through a silicon-oxygen bond, and then the acid group in the composite resin (A'BC) is neutralized using a basic compound to obtain a composite resin (ABC), or a step in which the acid group in the obtained composite resin (A'B) is neutralized using a basic compound to obtain a composite resin (AB), and then the composite resin (AB) and a condensation product (c) of an alkyltrialkoxysilane having an alkyl group having 1 to 3 carbon atoms are subjected to hydrolysis condensation to obtain a composite resin (ABC) having the polysiloxane segment (B) of the composite resin (AB) and a polysiloxane segment (C) derived from a condensation product (c) of an alkyltrialkoxysilane having an alkyl group having 1 to 3 carbon atoms, which segments are bonded through a silicon-oxygen bond.

With respect to the hydrolysis condensation reaction in the production step, the reaction can proceed by various types of methods, but preferred is a simple and easy method in which water and a catalyst are fed during the production step to cause the reaction to proceed.

The hydrolysis condensation reaction means a condensation reaction such that part of the above-mentioned hydrolyzable group is hydrolyzed due to water or the like to form a hydroxyl group, and then the formed hydroxyl group and the hydrolyzable group undergo condensation.

The polymer (a') is a polymer having both an acid group and a silicon atom-bonded hydroxyl group and/or hydrolyzable group, and is the same as the polymer (a) having both a neutralized acid group and a silicon atom-bonded hydroxyl group and/or hydrolyzable group except that the acid group is not neutralized.

When a vinyl polymer is used as the polymer (a'), the vinyl polymer can be produced by, for example, polymerizing an acid group-containing vinyl monomer, a silicon atom-bonded hydroxyl group-containing vinyl monomer and/or a silicon atom-bonded hydrolyzable group-containing vinyl monomer, and, if necessary, an additional vinyl monomer.

Examples of the acid group-containing vinyl monomers include vinyl monomers containing an acid group, such as a carboxyl group, a phosphoric acid group, an acid phosphate group, a phosphorous acid group, a sulfonic acid group, or a sulfinic acid group, but especially preferred is a carboxyl group (which may be a carboxylic anhydride

group)-containing vinyl monomer.

Examples of the carboxyl group-containing vinyl monomers include unsaturated carboxylic acids, such as (meth)acrylic acid, 2-carboxyethyl (meth)acrylate, crotonic acid, itaconic acid, maleic acid, and fumaric acid; unsaturated polycarboxylic anhydrides, such as maleic anhydride and itaconic anhydride; unsaturated monocarboxylic anhydrides, such as acrylic anhydride and methacrylic anhydride; mixed anhydrides of an unsaturated carboxylic acid, such as acrylic acid or methacrylic acid, and a saturated carboxylic acid, such as acetic acid, propionic acid, or benzoic acid; monoesters (half esters) of a saturated dicarboxylic acid and a saturated monohydric alcohol, such as monomethyl itaconate, mono-n-butyl itaconate, monomethyl maleate, mono-n-butyl maleate, monomethyl fumarate, and mono-n-butyl fumarate; monovinyl esters of a saturated dicarboxylic acid, such as monovinyl adipate and monovinyl succinate; addition reaction products of a saturated polycarboxylic anhydride, such as succinic anhydride, glutaric anhydride, phthalic anhydride, or trimellitic anhydride, and a vinyl monomer containing a hydroxyl group bonded to a carbon atom; and monomers obtained by subjecting the carboxyl group-containing monomer and a lactone to addition reaction. Of these, preferred are unsaturated carboxylic acids, such as (meth) acrylic acid, because they can be easily introduced into the vinyl polymer.

Further, the carboxyl group in the vinyl monomer may be blocked, and examples of vinyl monomers having such a blocked carboxyl group include silyl ester group-containing vinyl monomers, such as trimethylsilyl (meth)acrylate, dimethyl-tert-butylsilyl (meth)acrylate, and trimethylsilyl crotonate; hemiacetal ester group- or hemiketal ester group-containing monomers, such as 1-ethoxyethyl (meth)acrylate, 2-methoxy-2-(meth)acryloyloxypropane, and 2-(meth)acryloyloxytetrahydrofuran; and tert-butyl ester group-containing monomers, such as tert-butyl (meth)acrylate and tert-butyl crotonate.

Examples of the silicon atom-bonded hydroxyl group-containing vinyl monomers include trihydroxyvinylsilane, ethoxydihydroxyvinylsilane, diethoxyhydroxyvinylsilane, dichlorohydroxyvinylsilane, 3-(meth)acryloyloxypropyltrihydroxysilane, and 3-(meth)acryloyloxypropylmethyldihydroxysilane.

As the silicon atom-bonded hydrolyzable group-containing vinyl monomer, for example, there can be used a vinyl monomer having a hydrolyzable group represented by the following general formula (7):

[Chem. 7]

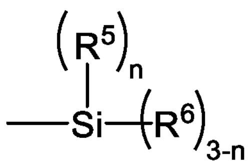

(7)

wherein, in the general formula (7), $R^5$ is a monovalent organic group, such as an alkyl group, an aryl group, or an aralkyl group, $R^6$ is a halogen atom, an alkoxy group, an acyloxy group, a phenoxy group, an aryloxy group, a mercapto group, an amino group, an amide group, an aminoxy group, an iminoxy group, or an alkenyloxy group, and n is an integer of 0 to 2.

Examples of the vinyl monomers having a hydrolyzable group represented by the general formula (7) above include vinyltrimethoxysilane, vinyltriethoxysilane, vinylmethyldimethoxysilane, vinyltri(2-methoxyethoxy)silane, vinyltriacetoxysilane, vinyltrichlorosilane, 2-trimethoxysilyl ethyl vinyl ether, 3-(meth)acryloyloxypropyltrimethoxysilane, 3-(meth)acryloyloxypropyltriethoxysilane, 3-(meth)acryloyloxypropylmethyldimethoxysilane, and 3-(meth)acryloyloxypropyltrichlorosilane. Of these, from the viewpoint of causing the hydrolysis reaction to smoothly proceed and facilitating removal of a side product after the reaction, vinyltrimethoxysilane and 3-(meth)acryloyloxypropyltrimethoxysilane are preferred.

Further, examples of the additional vinyl monomers include alkyl (meth)acrylates having an alkyl group having 1 to 22 carbon atoms, such as methyl (meth)acrylate, ethyl (meth)acrylate, n-propyl (meth)acrylate, n-butyl (meth)acrylate, 2-ethylhexyl (meth)acrylate, and lauryl (meth)acrylate; aralkyl (meth)acrylates, such as benzyl (meth)acrylate and 2-phenylethyl (meth)acrylate; cycloalkyl (meth)acrylates, such as cyclohexyl (meth)acrylate and isobornyl (meth)acrylate; ω-alkoxyalkyl (meth)acrylates, such as 2-methoxyethyl (meth)acrylate and 4-methoxybutyl (meth)acrylate; aromatic vinyl monomers, such as styrene, p-tert-butylstyrene, α-methylstyrene, and vinyltoluene; vinyl carboxylates, such as vinyl acetate, vinyl propionate, vinyl pivalate, and vinyl benzoate; alkyl crotonates, such as methyl crotonate and ethyl crotonate; unsaturated dibasic acid dialkyl esters, such as dimethyl maleate, di-n-butyl maleate, dimethyl fumarate, and dimethyl itaconate; α-olefins, such as ethylene and propylene; fluoroolefins, such as vinylidene fluoride, tetrafluoroethylene, hexafluoropropylene, and chlorotrifluoroethylene; alkyl vinyl ethers, such as ethyl vinyl ether and n-butyl vinyl ether; cycloalkyl vinyl ethers, such as cyclopentyl vinyl ether and cyclohexyl vinyl ether; tertiary amide group-containing monomers, such as N,N-dimethyl(meth)acrylamide, N-(meth)acryloylmorpholine, N-(meth)acryloylpyrrolidine, and N-vinylpyrrolidone;

hydroxyalkyl (meth)acrylates, such as 2-hydroxyethyl (meth)acrylate, 2-hydroxypropyl (meth)acrylate, and 4-hydroxybutyl (meth)acrylate; hydroxyl group-containing vinyl ethers, such as 2-hydroxyethyl vinyl ether and 4-hydroxybutyl vinyl ether; hydroxyl group-containing allyl ethers, such as 2-hydroxyethyl allyl ether and 2-hydroxybutyl allyl ether; addition reaction products of the above vinyl monomer containing a hydroxyl group bonded to a carbon atom and a lactone, such as ε-caprolactone;

tertiary amino group-containing (meth)acrylates, such as 2-dimethylaminoethyl (meth)acrylate, 2-diethylaminoethyl (meth)acrylate, 2-di-n-propylaminoethyl (meth)acrylate, 3-dimethylaminopropyl (meth)acrylate, 4-dimethylaminobutyl (meth)acrylate, and N-[2-(meth)acryloyloxy]ethylmorpholine; tertiary amino group-containing aromatic vinyl monomers, such as vinylpyridine, N-vinylcarbazole, and N-vinylquinoline; tertiary amino group-containing (meth)acrylamides, such as N-(2-dimethylamino)ethyl(meth)acrylamide, N-(2-diethylamino)ethyl(meth)acrylamide, and N-(2-di-n-propylamino)ethyl(meth)acrylamide; tertiary amino group-containing crotonic acid amides, such as N-(2-dimethylamino)ethylcrotonic acid amide and N-(4-dimethylamino)butylcrotonic acid amide; and tertiary amino group-containing vinyl ethers, such as 2-dimethylaminoethyl vinyl ether, 2-diethylaminoethyl vinyl ether, and 4-dimethylaminobutyl vinyl ether.

The type and amount of the additional vinyl monomer can be appropriately selected according to the properties to be imparted to the aqueous resin composition of the invention so that the effects of the invention are not sacrificed.

Further, with respect to the polymer (a'), for the purpose of improving the solubility or dispersibility of the composite resin (ABC) in an aqueous medium, one having at least one hydrophilic group selected from the group consisting of an anionic group, a cationic group, and a nonionic group can be used.

The vinyl polymer usable as the polymer (a') can be produced by, for example, polymerizing an acid group-containing vinyl monomer, a silicon atom-bonded hydroxyl group-containing vinyl monomer and/or a silicon atom-bonded hydrolyzable group-containing vinyl monomer, and, if necessary, an additional vinyl monomer by a polymerization method, such as a bulk radical polymerization method, a solution radical polymerization method, or a non-aqueous dispersion radical polymerization method. Of these, a so-called solution radical polymerization method is preferably used in which the vinyl monomer in an organic solvent is subjected to radical polymerization to produce a vinyl polymer because the vinyl polymer can be easily produced by this method.

When polymerizing the vinyl monomer by the radical polymerization method, if necessary, a polymerization initiator can be used. Examples of such polymerization initiators include azo compounds, such as 2,2'-azobis(isobutyronitrile), 2,2'-azobis(2,4-dimethylvaleronitrile), and 2,2'-azobis(2-methylbutyronitrile); and peroxides, such as tert-butyl peroxypivalate, tert-butyl peroxybenzoate, tert-butyl peroxy-2-ethylhexanoate, di-tert-butyl peroxide, cumene hydroperoxide, and diisopropyl peroxycarbonate.

Examples of the organic solvents include aliphatic or alicyclic hydrocarbons, such as n-hexane, n-heptane, n-octane, cyclohexane, and cyclopentane; aromatic hydrocarbons, such as toluene, xylene, and ethylbenzene; alcohols, such as methanol, ethanol, n-butanol, ethylene glycol monomethyl ether, and propylene glycol monomethyl ether; esters, such as ethyl acetate, n-butyl acetate, n-amyl acetate, ethylene glycol monomethyl ether acetate, and propylene glycol monomethyl ether acetate; ketones, such as acetone, methyl ethyl ketone, methyl isobutyl ketone, methyl n-amyl ketone, and cyclohexanone; polyalkylene glycol dialkyl ethers, such as diethylene glycol dimethyl ether and diethylene glycol dibutyl ether; ethers, such as 1,2-dimethoxyethane, tetrahydrofuran, and dioxane; and N-methylpyrrolidone, dimethylformamide, dimethylacetamide, and ethylene carbonate, and these can be used individually or in combination.

The polymer (a') preferably has a number average molecular weight in the range of from 500 to 200,000, more preferably in the range of from 700 to 100,000, especially preferably in the range of from 1,000 to 50,000. By using the polymer (a') having a number average molecular weight in the above range, an occurrence of thickening or gelation during the production of the composite resin (ABC) can be prevented, and further a coating film having excellent durability can be formed.

Next, the organoalkoxysilane (b) and/or hydrolysis condensation product thereof (b-1) used for constituting the polysiloxane segment (B) in the production step (I) above is described.

With respect to the organoalkoxysilane (b), there is no particular limitation, but especially a monoorganotrialkoxysilane having an organic group having 4 to 12 carbon atoms and a diorganodialkoxysilane having two methyl group(s) and/or ethyl group(s) are preferred because the composite resin (ABC) having excellent dispersion stability can be produced and a coating film having excellent durability can be formed.

With respect to the hydrolysis condensation product (b-1) of the organoalkoxysilane (b), there is no particular limitation as long as it is obtained by subjecting the organoalkoxysilane (b) to hydrolysis condensation, but preferred is a hydrolysis condensation product obtained by subjecting a monoorganotrialkoxysilane having a silicon atom-bonded organic group having 4 to 12 carbon atoms and/or a diorganodialkoxysilane having two silicon atom-bonded methyl group(s) and/or ethyl group(s) to hydrolysis condensation.

Examples of the monoorganotrialkoxysilanes having a silicon atom-bonded organic group having 4 to 12 carbon atoms include iso-butyltrimethoxysilane, cyclohexyltrimethoxysilane, phenyltrimethoxysilane, phenyltriethoxysilane, 3-(meth)acryloyloxypropyltrimethoxysilane, and 3-(meth)acryloyloxypropyltriethoxysilane.

Examples of the diorganodialkoxysilanes having two silicon atom-bonded methyl group(s) and/or ethyl group(s) include dimethyldimethoxysilane, dimethyldiethoxysilane, dimethyldi-n-butoxysilane, dimethyldiacetoxysilane, diethyldimethoxysilane, and diethyldiacetoxysilane.

Of these organoalkoxysilanes (b), from the viewpoint of causing the hydrolysis reaction to smoothly proceed and facilitating removal of a side product after the reaction, iso-butyltrimethoxysilane, phenyltrimethoxysilane, and dimethyldimethoxysilane are preferred. Further, these organoalkoxysilanes (b) may be used individually or in combination.

In the production step (I) above, the hydrolysis condensation product (b-1) of the organoalkoxysilane (b) alone can be used, but, from the viewpoint of easy production of the composite resin (A'B) by hydrolysis condensation, the use of the organoalkoxysilane (b) alone or the use of the organoalkoxysilane (b) and the hydrolysis condensation product thereof (b-1) in combination is preferred, and the use of the organoalkoxysilane (b) alone is especially preferred. In the present invention, the use of the organoalkoxysilane (b) alone means using only the organoalkoxysilane (b), and includes the use of two or more types of the organoalkoxysilanes (b) in combination.

With respect to the hydrolysis condensation reaction in the production step (I) above, the reaction can proceed by various types of methods, but preferred is a simple and easy method in which water and a catalyst are fed during the production step (I) to cause the reaction to proceed.

Examples of the catalysts include inorganic acids, such as hydrochloric acid, sulfuric acid, and phosphoric acid; organic acids, such as p-toluenesulfonic acid, monoisopropyl phosphate, and acetic acid; inorganic bases, such as sodium hydroxide and potassium hydroxide; titanates, such as tetraisopropyl titanate and tetrabutyl titanate; compounds containing a basic nitrogen atom, such as 1,8-diazabicyclo[5.4.0]undecene-7 (DBU), 1,5-diazabicyclo[4.3.0]nonene-5 (DBN), 1,4-diazabicyclo[2.2.2]octane (DABCO), tri-n-butylamine, dimethylbenzylamine, monoethanolamine, imidazole, and 1-methylimidazole; quaternary ammonium salts, such as a tetramethylammonium salt, a tetrabutylammonium salt, and a dilauryldimethylammonium salt, wherein the quaternary ammonium salt has chloride, bromide, carboxylate, hydroxide, or the like as a counter anion; and tin carboxylates, such as dibutyltin diacetate, dibutyltin dioctanoate, dibutyltin dilaurate, dibutyltin diacetylacetonate, tin octylate, and tin stearate, and these can be used individually or in combination.

The catalyst is used in an amount of, relative to 100 parts by mass of the organoalkoxysilane (b) and/or the hydrolysis condensation product thereof (b-1), preferably in the range of from 0.0001 to 10 parts by mass, more preferably in the range of from 0.0005 to 3 parts by mass, especially preferably in the range of from 0.001 to 1 part by mass.

Further, the amount of water used for causing the hydrolysis condensation reaction to proceed is, relative to 1 mol of the hydrolyzable group and hydroxyl group in the organoalkoxysilane (b) and/or the hydrolysis condensation product thereof (b-1), suitably 0.05 mol or more, preferably 0.1 mol or more, especially preferably 0.5 to 3.0 mol.

The catalyst and water may be fed at the same time or may be successively fed, or a preliminarily prepared mixture of the catalyst and water may be fed.

The reaction temperature for the hydrolysis condensation reaction is suitably in the range of from 0 to 150°C, preferably in the range of from 20 to 100°C. Further, with respect to the pressure for the reaction, the reaction can be conducted under any of conditions under atmospheric pressure, those under a pressure, and those under a reduced pressure.

An alcohol and water which are side products possibly formed in the hydrolysis condensation reaction may be removed by a method of distillation or the like when such a side product lowers the stability or the like of the obtained aqueous curable coating composition.

Next, the condensation product (c) of alkyltrialkoxysilane having an alkyl group having 1 to 3 carbon atoms used for constituting the polysiloxane segment (C) in the production step (II) above is described in detail.

Examples of the alkyltrialkoxysilanes having an alkyl group having 1 to 3 carbon atoms include methyltrimethoxysilane, methyltriethoxysilane, ethyltrimethoxysilane, ethyltriethoxysilane, n-propyltrimethoxysilane, and iso-propyltrimethoxysilane. Of these, from the viewpoint of causing the hydrolysis reaction to smoothly proceed and facilitating removal of a side product after the reaction, methyltrimethoxysilane and ethyltrimethoxysilane are preferred. These alkyltrialkoxysilanes may be used individually or in combination.

With respect to the method for obtaining the condensation product (c) from the alkyltrialkoxysilane, there is no particular limitation, and there can be mentioned various types of methods, but preferred is a simple and easy method in which water and a catalyst are fed to cause the hydrolysis condensation reaction to proceed.

The water and catalyst used in this instance can be used under the same conditions as those for the hydrolysis condensation reaction in the production step (I) above.

Further, in the production step (II), in addition to the condensation product (c) of alkyltrialkoxysilane having an alkyl group having 1 to 3 carbon atoms, an additional silane compound or a hydrolysis condensation product thereof can be used.

Examples of the additional silane compounds include tetrafunctional alkoxysilane compounds, such as tetramethoxysilane, tetraethoxysilane, and tetra-n-propoxysilane; and hydrolysis condensation products of the tetrafunctional alkoxysilane compounds. These can be used in such a range of amount that the effects of the invention are not sacrificed.

When the tetrafunctional alkoxysilane compound or hydrolysis condensation product thereof is used, it is preferred that the amount of the silicon atoms in the tetrafunctional alkoxysilane compound or hydrolysis condensation product thereof used is in the range of less than 20 mol%, based on the total amount (100 mol%) of the silicon atoms constituting the polysiloxane segment (B) and polysiloxane segment (C).

Examples of the plasticizers (D) include phthalate plasticizers, such as dibutyl phthalate, diheptyl phthalate, di(2-ethylhexyl) phthalate, and butylbenzyl phthalate; aliphatic ester plasticizers, such as butyl oleate and methyl acetylricinoleate; aliphatic dibasic acid ester plasticizers, such as dioctyl adipate, dibutyl sebacate, and isodecyl succinate, trimellitate plasticizers, such as 2-ethylhexyl trimellitate and tridecyl trimellitate, ether ester plasticizers, such as pentaerythritol ester, diethylene glycol dibenzoate, dibutyl carbitol adipate, dibutoxyethoxyethyl adipate, triethylene glycol diacetate, and polyethylene glycol di-2-ethylhexanoate, benzoate plasticizers, such as diethylene glycol dibenzoate, dipropylene glycol dibenzoate, triethylene glycol dibenzoate, and polyethylene glycol dibenzoate; phosphate plasticizers, such as tricresyl phosphate and tributyl phosphate; epoxy plasticizers, such as a chlorinated paraffin, an alkyldiphenyl, a hydrocarbon oil, a process oil, an epoxidized soybean oil, and benzyl epoxystearate, vinyl polymers obtained by polymerizing a vinyl monomer by various methods; polyester plasticizers obtained from a dibasic acid, such as sebacic acid, adipic acid, azelaic acid, or phthalic acid, and a dihydric alcohol, such as ethylene glycol, diethylene glycol, triethylene glycol, propylene glycol, or dipropylene glycol; polystyrene compounds, such as polystyrene and poly-$\alpha$-methylstyrene; and polybutadiene, polybutene, polyisobutylene, butadiene-acrylonitrile, and polychloroprene. Of these, in view of further improving the substrate followability and water resistance, preferred are phthalate, trimellitate, ether ester, and benzoate plasticizers, and, in view of further improving the water resistance of the film formed at a low temperature, more preferred are ether ester and benzoate plasticizers. These plasticizers (D) may be used individually or in combination.

Further, in view of further improving the compatibility with a resin, the plasticizer (D) preferably has a molecular weight in the range of from 200 to 2,000, more preferably in the range of from 300 to 1,500.

In view of further improving the substrate followability and water resistance while maintaining excellent weathering resistance and stain resistance, the amount of the plasticizer (D) is, relative to 100 parts by mass of the composite resin (ABC), preferably in the range of from 0.1 to 60 parts by mass, more preferably in the range of from 0.5 to 45 parts by mass, further preferably in the range of from 1 to 35 parts by mass.

Examples of the aqueous media used in the invention include water, an organic solvent miscible with water, and a mixture thereof. Examples of organic solvents miscible with water include alcohols, such as methanol, ethanol, and n- and iso-propanol; ketones, such as acetone and methyl ethyl ketone; polyalkylene glycols, such as ethylene glycol, diethylene glycol, and propylene glycol; polyalkylene glycol alkyl ethers; and lactams, such as N-methyl-2-pyrrolidone. In the invention, only water may be used, a mixture of water and an organic solvent miscible with water may be used, or only an organic solvent miscible with water may be used. From the viewpoint of safety and a load on the environment, only water or a mixture of water and an organic solvent miscible with water is preferred, and only water is especially preferred.

The aqueous resin composition of the invention has a composite resin (ABC) dispersed or dissolved in an aqueous medium, and further contains a plasticizer (D), and, for example, as a method for producing the aqueous resin composition, there can be mentioned a method in which a composite resin (ABC) and an aqueous medium are mixed with each other so that the composite resin (ABC) is dispersed or dissolved in the aqueous medium, and then a plasticizer (D) is mixed into the resultant dispersion or solution, a method in which a composite resin (ABC) and a plasticizer (D) are mixed with each other, and then the resultant mixture is mixed with an aqueous medium, and a method in which a composite resin (ABC) is produced in the system which contains a plasticizer (D) in advance, and the produced composite resin is mixed with an aqueous medium.

From the viewpoint of suppressing a sharp increase of the viscosity of the aqueous resin composition being produced, and improving the productivity, application properties, drying properties, and the like of the composition, the aqueous resin composition of the invention preferably has a nonvolatile content of 20 to 70% by mass, more preferably in the range of from 30 to 60% by mass.

The aqueous resin composition of the invention can contain a thermosetting resin if necessary. Examples of such thermosetting resins include a vinyl resin, a polyester resin, a polyurethane resin, an epoxy resin, an epoxy ester resin, an acrylic resin, a phenolic resin, a petroleum resin, a ketone resin, a silicone resin, and modified resins thereof.

In the aqueous resin composition of the invention, if necessary, various types of inorganic particles, such as a clay mineral, a metal, a metal oxide, and glass, can be used. Examples of types of metals include gold, silver, copper, platinum, titanium, zinc, nickel, aluminum, iron, silicon, germanium, antimony, and metal oxides thereof.

In the aqueous resin composition of the invention, if necessary, there can be used various additives, such as a photocatalytic compound, an inorganic pigment, an organic pigment, a loading pigment, a wax, a surfactant, a stabilizer, a fluidity modifier, a dye, a leveling agent, a rheology control agent, an ultraviolet light absorber, and an antioxidant.

Further, by incorporating a curing agent (E) into the aqueous resin composition of the invention, a coating film having more excellent durability can be obtained. As the curing agent (E), a compound having a functional group capable of reacting with the hydrophilic group or silanol group of the composite resin (ABC) or the like can be used.

Specific examples of the curing agents (E) include a compound having a silanol group and/or a hydrolyzable

silyl group, a polyepoxy compound, a polyoxazoline compound, a polycarbodiimide compound, and a polyisocyanate compound. Particularly, when using the composite resin which has a carboxyl group or a carboxylate group, it is preferred that a compound having an epoxy group and a silanol group and/or a hydrolyzable silyl group, a polyepoxy compound, a polyoxazoline compound, or a polycarbodiimide compound is used in combination with such a composite resin.

Examples of the compounds having a silanol group and/or a hydrolyzable silyl group include silane compounds similar to those mentioned above as examples which can be used in producing the composite resin, and further 3-glycidoxypropyltrimethoxysilane, 3-glycidoxypropylmethyldimethoxysilane, 3-glycidoxypropyltriethoxysilane, 3-glycidoxypropylmethyldiethoxysilane, β-(3,4-epoxycyclohexyl)ethyltrimethoxysilane, and hydrolysis condensation products thereof.

Examples of the polyepoxy compounds include polyglycidyl ethers having a structure derived from an aliphatic or alicyclic polyol, such as ethylene glycol, hexanediol, neopentyl glycol, trimethylolpropane, pentaerythritol, sorbitol, or hydrogenated bisphenol A; polyglycidyl ethers of an aromatic diol, such as bisphenol A, bisphenol S, or bisphenol F; polyglycidyl ethers of a polyether polyol, such as polyethylene glycol, polypropylene glycol, or polytetramethylene glycol; polyglycidyl ethers of tris(2-hydroxyethyl) isocyanurate; polyglycidyl esters of an aliphatic or aromatic polycarboxylic acid, such as adipic acid, butanetetracarboxylic acid, phthalic acid, or terephthalic acid; bisepoxides of a hydrocarbon diene, such as cyclooctadiene or vinylcyclohexene; and alicyclic polyepoxy compounds, such as bis(3,4-epoxycyclohexylmethyl) adipate and 3,4-epoxycyclohexylmethyl-3,4-epoxycyclohexyl carboxylate.

As the polyoxazoline compound, for example, 2,2'-p-phenylene-bis(1,3-oxazoline), 2,2'-tetramethylene-bis(1,3-oxazoline), 2,2'-octamethylene-bis(2-oxazoline), 2-isopropenyl-1,3-oxazoline, or a polymer thereof can be used.

As the polyisocyanate compound, for example, an aromatic diisocyanate, such as tolylene diisocyanate or diphenylmethane-4,4'-diisocyanate; an aralkyl diisocyanate, such as meta-xylylene diisocyanate or α,α,α',α'-tetramethyl-meta-xylylene diisocyanate; or hexamethylene diisocyanate, lysine diisocyanate, 1,3-bisisocyanatomethylcyclohexane, 2-methyl-1,3-diisocyanatocyclohexane, 2-methyl-1,5-diisocyanatocyclohexane, or isophorone diisocyanate can be used.

Further, as the polyisocyanate compound, various prepolymers having an isocyanate group, a prepolymer having an isocyanurate ring, a polyisocyanate having a biuret structure, or a vinyl monomer having an isocyanate group can be used.

The isocyanate group of the polyisocyanate compound used as a curing agent, if necessary, may be blocked by a conventionally known blocking agent, such as methanol.

The curing agent (E) is used in an amount, for example, relative to 100 parts by mass of the composite resin (ABC), in terms of the amount of the solids, preferably in the range of from 0.1 to 50 parts by mass, more preferably in the range of from 0.5 to 30 parts by mass, especially preferably in the range of from 1 to 20 parts by mass.

Further, when the composite resin (ABC) has a carboxyl group as a hydrophilic group, with respect to the amount of the curing agent (E), relative to 1 equivalent of the carboxyl group in the composite resin (A), the equivalent of a reactive functional group of the curing agent, such as an epoxy group, a cyclocarbonate group, a hydroxyl group, an oxazoline group, a carbodiimide group, or a hydrazino group, is preferably in the range of from 0.2 to 5.0 equivalent, more preferably in the range of from 0.5 to 3.0 equivalent, especially preferably in the range of from 0.7 to 2.0 equivalent.

Further, the aqueous resin composition of the invention can contain a curing catalyst if necessary.

As the curing catalyst, there can be used, for example, lithium hydroxide, sodium hydroxide, potassium hydroxide, sodium methylate, tetraisopropyl titanate, tetra-n-butyl titanate, tin octylate, lead octylate, cobalt octylate, zinc octylate, calcium octylate, zinc naphthenate, cobalt naphthenate, di-n-butyltin diacetate, di-n-butyltin dioctanoate, di-n-butyltin dilaurate, di-n-butyltin maleate, p-toluenesulfonic acid, trichloroacetic acid, phosphoric acid, a monoalkylphosphoric acid, a dialkylphosphoric acid, a monoalkylphosphorous acid, dialkylphosphorous acid, or the like.

The aqueous resin composition of the invention is advantageous in that a coating film having excellent substrate followability can be formed from the composition, and therefore can be used in various applications including a coating agent and a bonding agent. Especially, the aqueous resin composition of the invention is advantageous in that a coating film having excellent stain resistance, durability and weathering resistance as well as excellent substrate followability can be formed from the composition, and hence is preferably used in a coating agent, more preferably used in a coating agent for forming a top layer or a coating agent for forming a primer layer.

Examples of substrates onto which the coating agent can be applied to form a coating film include an inorganic substrate, a plastic substrate, a metal substrate, fabric, paper, and a wooden substrate.

Examples of the inorganic substrates include those having an inorganic material as a main component, such as a cement substrate, a silicate substrate, e.g., calcium silicate, a gypsum substrate, and a ceramic substrate. For example, there can be mentioned in-place applied (wet type) substrates, such as exposed concrete, cement mortar, gypsum plaster, dolomite plaster, and Japanese lime plaster, and in-place produced product (dry type) substrates, such as autoclaved lightweight concrete (ALC), asbestos cement, glass fiber-reinforced calcium silicate, gypsum plasterboard, a calcination product of clay, such as tile, and glass.

Examples of the plastic substrates include substrates formed from a polyolefin, such as polyethylene, polypropylene, or an ethylene-propylene copolymer; substrates formed from a polyester, such as polyethylene isophthalate, polyethylene terephthalate, polyethylene naphthalate, or polybutylene terephthalate; substrates formed from a polyamide, such as nylon 1, nylon 11, nylon 6, nylon 66, or nylon MX-D; substrates formed from a styrene polymer, such as polystyrene, a styrene-butadiene block copolymer, a styrene-acrylonitrile copolymer, or a styrene-butadiene-acrylonitrile copolymer (ABS resin); substrates formed from an acrylic polymer, such as polymethyl methacrylate or a methyl methacrylate-ethyl acrylate copolymer; and substrates formed from polycarbonate. The plastic substrate may be of a single layer or may have a laminated structure of two layers or more. Further, these plastic substrates may be unstretched, uniaxially stretched, or biaxially stretched.

Further, if necessary, the plastic substrate may contain an additive, such as an antistatic agent, an anti-fogging agent, an anti-blocking agent, an antioxidant, a light stabilizer, a nucleating agent, or a lubricant, in such a range of amount that the effects of the invention are not sacrificed.

With respect to the plastic substrate, for further improving the adhesion to the coating agent of the invention, the surface of the substrate may have been subjected to surface treatment, and examples of such surface treatments include a corona discharge treatment, a plasma treatment, a flame plasma treatment, an electron beam irradiation treatment, and an ultraviolet light irradiation treatment, and these treatments may be employed individually or in combination.

With respect to the form of the substrate, there is no particular limitation, and, for example, the substrate may be in a sheet form, a plate form, a spherical form, or a film form or may be a large-size construction or an assembled article or molded article of a complicated shape.

The surface of the substrate may be preliminarily coated with a primer coating composition or the like, and, even when the coated portion of the substrate deteriorates, the coating agent of the invention can be applied to such a coated portion.

Examples of the primer coating compositions include various types of water-soluble coating compositions, aqueous dispersion coating compositions, organic solvent coating compositions, organic solvent dispersion coating compositions, and powder coating compositions. Specifically, there can be used various types of coating compositions, such as an acrylic resin coating composition, a polyester resin coating composition, an alkyd resin coating composition, an epoxy resin coating composition, a fatty acid-modified epoxy resin coating composition, a silicone resin coating composition, a polyurethane resin coating composition, a fluoroolefin coating composition, and an amine-modified epoxy resin coating composition.

Further, the primer coating composition may be a clear coating composition containing no pigment, an enamel coating composition containing the pigment, or a metallic coating composition containing aluminum flakes or the like.

As a method for applying the coating agent of the invention to the substrate, for example, there can be employed various types of coating methods, such as a brushing method, a roller coating method, a spray coating method, an immersion coating method, a flow coater coating method, a roll coater coating method, and an electrodeposition coating method.

The coating agent of the invention is applied to the surface of the substrate by the above-mentioned coating method, and then allowed to stand at ordinary room temperature for about 1 to 10 days, or heated at a temperature in the range of from 40 to 250°C for about 10 seconds to 2 hours, obtaining a coated article having a coating film which is excellent in durability, crack resistance, weathering resistance, stain resistance, and the like.

Examples of articles having a coating film formed by the above-mentioned method using the coating agent of invention include housings for household appliances, such as a television set, a refrigerator, a washing machine, and an air conditioner; housings for electronic devices, such as a personal computer, a smartphone, a cellular phone, a digital camera, and a game machine; housings for office automation machines, such as a printer and a facsimile machine; and various types of plastic members, such as various parts and the like used in interior trims for various vehicles, such as an automobile and a railway rolling stock. Further examples include constructional inner and outer materials, such as an outer wall, a roof, a film structure, glass, and a decorative sheet; civil engineering members for a sound barrier, a drainage conduit, and the like; and metal members, e.g., plated steel plates used in parts for household appliances, industrial machines, and automobiles, and the like, such as a zinc-plated steel plate and an aluminum-zinc alloy steel plate, an aluminum plate, an aluminum alloy plate, an electromagnetic steel plate, a copper plate, and a stainless steel plate. Furthermore, a coating film having excellent substrate followability can be formed from the coating agent of the invention, and hence there can be mentioned various types of functional films constituting a polarizer for liquid crystal display, and the like.

## Examples

Hereinbelow, the present invention will be described in more detail with reference to the following Examples and Comparative Examples.

(Synthesis Example 1: Production of a methyltrimethoxysilane condensation product (c-1))

Into a reaction vessel equipped with a stirrer, a thermometer, a dropping funnel, a condenser, and a nitrogen gas introducing inlet was charged 1,421 parts by mass of methyltrimethoxysilane (hereinafter, referred to simply as "MTMS"), and the temperature in the vessel was increased to 60°C. Then, a mixture of 0.17 part by mass of iso-propyl acid phosphate ("A-3", manufactured by Sakai Chemical Industry Co. Ltd.; hereinafter, referred to as "catalyst (1)") and 207 parts by mass of deionized water was dropwise added to the reaction vessel over 5 minutes, and then the resultant mixture was stirred at a temperature of 80°C for 4 hours to perform a hydrolysis condensation reaction.

The condensation product obtained by the above-mentioned hydrolysis condensation reaction was subjected to distillation under conditions with a reduced pressure of 40 to 1.3 kPa (which are conditions such that the reduced pressure at the start of distillation for methanol is 40 kPa and the pressure is finally reduced to 1.3 kPa; this applies to the followings) and at a temperature of 40 to 60°C to remove the methanol and water formed during the reaction, obtaining 1,000 parts by mass of a liquid (effective component content: 70% by mass) containing an MTMS condensation product (c-1) having a number average molecular weight of 1,000.

The effective component content is a value determined by dividing a theoretical yield (parts by mass), which is obtained in the case where all the methoxy groups of a silane monomer, such as MTMS, have undergone a condensation reaction, by an actual yield (parts by mass) after the condensation reaction [Theoretical yield (parts by mass) obtained in the case where all the methoxy groups of a silane monomer have undergone a condensation reaction/Actual yield (parts by mass) after the condensation reaction].

(Synthesis Example 2: Production of an aqueous dispersion of a composite resin (ABC-1))

Into a reaction vessel equipped with a stirrer, a thermometer, a dropping funnel, a condenser, and a nitrogen gas introducing inlet were charged 50 parts by mass of propylene glycol monopropyl ether (hereinafter, referred to simply as "PnP"), 80 parts by mass of isopropyl alcohol (hereinafter, referred to simply as "IPA"), 26 parts by mass of phenyltrimethoxysilane (hereinafter, referred to simply as "PTMS"), and 15 parts by mass of dimethyldimethoxysilane (hereinafter, referred to simply as "DMDMS"), and the temperature of the resultant mixture was increased to 80°C.

Then, a mixture containing 96 parts by mass of methyl methacrylate (hereinafter, referred to simply as "MMA"), 99 parts by mass of cyclohexyl methacrylate (hereinafter, referred to simply as "CHMA"), 96 parts by mass of butyl acrylate (hereinafter, referred to simply as "BA"), 13 parts by mass of acrylic acid (hereinafter, referred to simply as "AA"), 16 parts by mass of 3-methacryloxypropyltrimethoxysilane (hereinafter, referred to simply as "MPTS"), 16 parts by mass of IPA, and 16 parts by mass of tert-butyl peroxy-2-ethylhexanoate (hereinafter, referred to simply as "TBPEH") was dropwise added to the reaction vessel at the same temperature over 4 hours, and then further the resultant mixture was subjected to reaction at the same temperature for 2 hours, obtaining an organic solvent solution of an acrylic polymer (a'-1) having a carboxyl group and a hydrolyzable group and having a number average molecular weight of 19,000.

Subsequently, a mixture of 0.4 part by mass of a catalyst (1) and 11 parts by mass of deionized water was dropwise added to the obtained solution over 5 minutes, and further the resultant mixture was stirred at the same temperature for 10 hours to perform a hydrolysis condensation reaction, obtaining a composite resin (A'B-1) having a polymer segment having both a carboxyl group and a hydrolyzable group bonded to a silicon atom, and a polysiloxane segment derived from PTMS and DMDMS.

Then, 14 parts by mass of triethylamine (hereinafter, referred to simply as "TEA") was added to neutralize a carboxyl group in the composite resin (A'B-1) to obtain a composite resin (AB-1), and then 81 parts by mass of the methyltrimethoxysilane condensation product (c-1) was added to the obtained composite resin, and further 550 parts by mass of deionized water was added to form by hydrolysis condensation a composite resin (ABC-1) having the composite resin (AB-1) and a polysiloxane segment (C-1) derived from the methyltrimethoxysilane condensation product (c-1), which are bonded to each other, and to disperse the composite resin (ABC-1) in an aqueous medium, obtaining an aqueous dispersion of the composite resin (ABC-1).

Then, the obtained aqueous dispersion was subjected to distillation under conditions with a reduced pressure of 40 to 1.3 kPa and at a temperature of 40 to 60°C for 2 hours to remove IPA and the formed methanol and water, obtaining 1,000 parts by mass of an aqueous dispersion of the composite resin (ABC-1) having a nonvolatile content of 40.0%.

(Synthesis Example 3: Production of an aqueous dispersion of a composite resin (ABC-2))

Into the same reaction vessel as used in Synthesis Example 1 were charged 36 parts by mass of PnP, 80 parts by mass of IPA, 32 parts by mass of PTMS, and 19 parts by mass of DMDMS, and the temperature of the resultant mixture was increased to 80°C. Then, a mixture containing 99 parts by mass of MMA, 86 parts by mass of butyl methacrylate (hereinafter, referred to simply as "BMA"), 67 parts by mass of BA, 16 parts by mass of AA, 5 parts by mass of

MPTS, 14 parts by mass of PnP, and 14 parts by mass of TBPEH was dropwise added to the reaction vessel at the same temperature over 4 hours, and, after completion of the addition, further the resultant mixture was subjected to reaction at the same temperature for 2 hours to obtain a polymer (a'-2) having both a carboxyl group and a hydrolyzable group bonded to a silicon atom and having a number average molecular weight of 18,000. Then, a mixture of 0.9 part by mass of a catalyst (1) and 24 parts by mass of deionized water was dropwise added to the obtained polymer over 5 minutes, and further the resultant mixture was stirred at the same temperature for 10 hours to perform a hydrolysis condensation reaction, obtaining a composite resin (A'B-2) having a polymer segment having both a carboxyl group and a hydrolyzable group bonded to a silicon atom, and a polysiloxane segment derived from PTMS and DMDMS. Then, 18 parts by mass of TEA was added to neutralize a carboxyl group in the composite resin (A'B-2) to obtain a composite resin (AB-2), and then 124 parts by mass of the methyltrimethoxysilane condensation product (c-1) was added to the obtained composite resin, and further 550 parts by mass of deionized water was added to form by hydrolysis condensation a composite resin (ABC-2) having the composite resin (AB-2) and a polysiloxane segment (C-1) derived from the methyltrimethoxysilane condensation product (c-1), which are bonded to each other, and to disperse the composite resin (ABC-2) in an aqueous medium, obtaining an aqueous dispersion of the composite resin (ABC-2). Then, the obtained aqueous dispersion was subjected to distillation under conditions with a reduced pressure of 40 to 1.3 kPa and at a temperature of 40 to 60°C for 2 hours to remove IPA and the formed methanol and water, obtaining 1,000 parts by mass of an aqueous dispersion of the composite resin (ABC-2) having a nonvolatile content of 40.0%.

(Synthesis Example 4: Production of an aqueous dispersion of a composite resin (ABC-3))

Into the same reaction vessel as used in Synthesis Example 1 were charged 60 parts by mass of PnP, 50 parts by mass of IPA, 54 parts by mass of PTMS, and 32 parts by mass of DMDMS, and the temperature of the resultant mixture was increased to 80°C. Then, a mixture containing 40 parts by mass of MMA, 84 parts by mass of BMA, 51 parts by mass of 2-ethylhexyl methacrylate (hereinafter, referred to simply as "EHMA"), 19 parts by mass of AA, 6 parts by mass of MPTS, 10 parts by mass of PnP, and 10 parts by mass of TBPEH was dropwise added to the reaction vessel at the same temperature over 4 hours, and, after completion of the addition, further the resultant mixture was subjected to reaction at the same temperature for 2 hours to obtain a polymer (a'-3) having both a carboxyl group and a hydrolyzable group bonded to a silicon atom and having a number average molecular weight of 17,000. Then, a mixture of 0.9 part by mass of a catalyst (1) and 24 parts by mass of deionized water was dropwise added to the obtained polymer over 5 minutes, and further the resultant mixture was stirred at the same temperature for 10 hours to perform a hydrolysis condensation reaction, obtaining a composite resin (A'B-3) having a polymer segment having both a carboxyl group and a hydrolyzable group bonded to a silicon atom, and a polysiloxane segment derived from PTMS and DMDMS. Then, 21 parts by mass of TEA was added to neutralize a carboxyl group in the composite resin (A'B-3) to obtain a composite resin (AB-3), and then 207 parts by mass of the methyltrimethoxysilane condensation product (c-1) was added to the obtained composite resin, and further 570 parts by mass of deionized water was added to form by hydrolysis condensation a composite resin (ABC-3) having the composite resin (AB-3) and a polysiloxane segment (C-1) derived from the methyltrimethoxysilane condensation product (c-1), which are bonded to each other, and to disperse the composite resin (ABC-3) in an aqueous medium, obtaining an aqueous dispersion of the composite resin (ABC-3). Then, the obtained aqueous dispersion was subjected to distillation under conditions with a reduced pressure of 40 to 1.3 kPa and at a temperature of 40 to 60°C for 2 hours to remove IPA and the formed methanol and water, obtaining 1,000 parts by mass of an aqueous dispersion of the composite resin (ABC-3) having a nonvolatile content of 40.0%.

(Synthesis Example 5: Production of an aqueous dispersion of a composite resin (ABC-4))

Into the same reaction vessel as used in Synthesis Example 1 were charged 126 parts by mass of PnP, 59 parts by mass of PTMS, and 62 parts by mass of DMDMS, and the temperature of the resultant mixture was increased to 80°C. Then, a mixture containing 21 parts by mass of MMA, 20 parts by mass of BMA, 14 parts by mass of BA, 13 parts by mass of AA, 2 parts by mass of MPTS, 3.5 parts by mass of PnP, and 3.5 parts by mass of TBPEH was dropwise added to the reaction vessel at the same temperature over 4 hours, and, after completion of the addition, further the resultant mixture was subjected to reaction at the same temperature for 2 hours to obtain a polymer (a'-4) having both a carboxyl group and a hydrolyzable group bonded to a silicon atom and having a number average molecular weight of 10,100. Then, a mixture of 0.016 part by mass of a catalyst (1) and 45 parts by mass of deionized water was dropwise added to the obtained polymer over 5 minutes, and further the resultant mixture was stirred at the same temperature for one hour to perform a hydrolysis condensation reaction, obtaining a composite resin (A'B-4) having a polymer segment having both a carboxyl group and a hydrolyzable group bonded to a silicon atom, and a polysiloxane segment derived from PTMS and DMDMS. Then, 290 parts by mass of the methyltrimethoxysilane condensation product (c-1) was added to the obtained composite resin, and further 59 parts by mass of deionized water was added and the resultant mixture was stirred at the same temperature for 16 hours to perform a hydrolysis condensation reaction, obtaining a reaction

mixture containing a composite resin (A'BC-4) having the composite resin (A'B-4) and a polysiloxane segment (C-1) derived from the methyltrimethoxysilane condensation product (c-1), which are bonded to each other. Then, the obtained reaction mixture was subjected to distillation under conditions with a reduced pressure of 40 to 1.3 kPa and at a temperature of 40 to 60°C for 2 hours to remove the formed methanol and water, and then 15 parts by mass of TEA was added to neutralize a carboxyl group in the composite resin (A'BC-4) to obtain a composite resin (ABC-4), and then 497 parts by mass of deionized water was added to disperse the composite resin in an aqueous medium, obtaining 1,000 parts by mass of an aqueous dispersion of the composite resin (ABC-4) having a nonvolatile content of 35.0%.

(Synthesis Example 6: Production of an aqueous dispersion of a composite resin (ABC-5))

Into the same reaction vessel as used in Synthesis Example 1 were charged 50 parts by mass of PnP, 80 parts by mass of IPA, 24 parts by mass of PTMS, and 14 parts by mass of DMDMS, and the temperature of the resultant mixture was increased to 80°C. Then, a mixture containing 70 parts by mass of MMA, 141 parts by mass of BMA, 113 parts by mass of BA, 11 parts by mass of AA, 18 parts by mass of MPTS, 18 parts by mass of IPA, and 18 parts by mass of TBPEH was dropwise added to the reaction vessel at the same temperature over 4 hours, and, after completion of the addition, further the resultant mixture was subjected to reaction at the same temperature for 2 hours to obtain a polymer (a'-5) having both a carboxyl group and a hydrolyzable group bonded to a silicon atom and having a number average molecular weight of 20,000. Then, a mixture of 0.4 part by mass of a catalyst (1) and 11 parts by mass of deionized water was dropwise added to the obtained polymer over 5 minutes, and further the resultant mixture was stirred at the same temperature for 10 hours to perform a hydrolysis condensation reaction, obtaining a composite resin (A'B-5) having a polymer segment having both a carboxyl group and a hydrolyzable group bonded to a silicon atom, and a polysiloxane segment derived from PTMS and DMDMS. Then, 12 parts by mass of TEA was added to neutralize a carboxyl group in the composite resin (A'B-5) to obtain a composite resin (AB-5), and then 34 parts by mass of the methyltrimethoxysilane condensation product (c-1) was added to the obtained composite resin, and further 550 parts by mass of deionized water was added to form by hydrolysis condensation a composite resin (ABC-5) having the composite resin (AB-7) and a polysiloxane segment (C-1) derived from the methyltrimethoxysilane condensation product (c-1), which are bonded to each other, and to disperse the composite resin (ABC-5) in an aqueous medium, obtaining a dispersion of the composite resin (ABC-5) . Then, the obtained dispersion was subjected to distillation under conditions with a reduced pressure of 40 to 1.3 kPa and at a temperature of 40 to 60°C for 2 hours to remove IPA and the formed methanol and water, obtaining 1,000 parts by mass of an aqueous dispersion of the composite resin (ABC-7) having a nonvolatile content of 40.0%.

(Synthesis Example 7: Production of an aqueous dispersion of a composite resin (ABC-6))

Into the same reaction vessel as used in Synthesis Example 1 were charged 149 parts by mass of PnP, 154 parts by mass of PTMS, and 94 parts by mass of DMDMS, and the temperature of the resultant mixture was increased to 80°C. Then, a mixture containing 7 parts by mass of MMA, 13 parts by mass of BMA, 7 parts by mass of BA, 7 parts by mass of AA, 1 part by mass of MPTS, 1 part by mass of PnP, and 1.4 parts by mass of TBPEH was dropwise added to the reaction vessel at the same temperature over 4 hours, and, after completion of the addition, further the resultant mixture was subjected to reaction at the same temperature for 2 hours to obtain a polymer (a'-6) having both a carboxyl group and a hydrolyzable group bonded to a silicon atom and having a number average molecular weight of 9,900. Then, a mixture of 0.03 part by mass of a catalyst (1) and 70 parts by mass of deionized water was dropwise added to the obtained polymer over 5 minutes, and further the resultant mixture was stirred at the same temperature for one hour to perform a hydrolysis condensation reaction, obtaining a composite resin (A'B-6) having a polymer segment having both a carboxyl group and a hydrolyzable group bonded to a silicon atom, and a polysiloxane segment derived from PTMS and DMDMS. Then, 224 parts by mass of the methyltrimethoxysilane condensation product (c-1) was added to the obtained composite resin, and further 38 parts by mass of deionized water was added and the resultant mixture was stirred at the same temperature for 16 hours to perform a hydrolysis condensation reaction, obtaining a reaction mixture containing a composite resin (A'BC-6) having the composite resin (A'B-6) and a polysiloxane segment (C-1) derived from the methyltrimethoxysilane condensation product (c-1), which are bonded to each other. Then, the obtained reaction mixture was subjected to distillation under conditions with a reduced pressure of 40 to 1.3 kPa and at a temperature of 40 to 60°C for 2 hours to remove the formed methanol and water, and then 8 parts by mass of TEA was added to neutralize a carboxyl group in the composite resin (A'BC-6) to obtain a composite resin (ABC-6), and then 500 parts by mass of deionized water was added to disperse the composite resin in an aqueous medium, obtaining 1,000 parts by mass of an aqueous dispersion of the composite resin (ABC-6) having a nonvolatile content of 35.0%.

(Example 1: Production and evaluation of an aqueous resin composition (1))

100 Parts by mass of the aqueous dispersion of the composite resin (ABC-1) obtained in Synthesis Example 2, 5 parts by mass of a plasticizer (D-1) ("ADKCIZER RS-1000", manufactured by ADEKA Corporation; polyether ester plasticizer), and 4 parts by mass of 3-glycidoxypropyltrimethoxysilane (hereinafter, referred to simply as "GPTMS") were uniformly mixed with each other to obtain an aqueous resin composition (1).

(Examples 2 to 4: Production and evaluation of aqueous resin compositions (2) to (4))

Aqueous resin compositions (2) to (4) were individually obtained in substantially the same manner as in Example 1 except that the composite resin (ABC-1) used in Example 1 was changed respectively to composite resins (ABC-2) to (ABC-4).

(Example 5: Production and evaluation of an aqueous resin composition (5))

100 Parts by mass of the aqueous dispersion of the composite resin (ABC-2) obtained in Synthesis Example 3, 5 parts by mass of a plasticizer (D-2) ("Monocizer W-260", manufactured by DIC Corporation; ether ester plasticizer), and 5.3 parts by mass of GPTMS were uniformly mixed with each other to obtain an aqueous resin composition (5).

(Example 6: Production and evaluation of an aqueous resin composition (6))

An aqueous resin composition (6) was obtained in substantially the same manner as in Example 5 except that the plasticizer (2) used in Example 5 was changed to a plasticizer (D-3) ("Monocizer PB-3A", manufactured by DIC Corporation; benzoate plasticizer).

(Example 7: Production and evaluation of an aqueous resin composition (7))

An aqueous resin composition (7) was obtained in substantially the same manner as in Example 5 except that the plasticizer (2) used in Example 5 was changed to a plasticizer (D-4) ("Monocizer DOA", manufactured by DIC Corporation; dioctyl adipate).

(Example 8: Production and evaluation of an aqueous resin composition (8))

An aqueous resin composition (8) was obtained in substantially the same manner as in Example 5 except that the plasticizer (2) used in Example 5 was changed to a plasticizer (D-5) ("Monocizer DBP", manufactured by DIC Corporation; dibutyl phthalate).

(Example 9: Production and evaluation of an aqueous resin composition (9))

An aqueous resin composition (9) was obtained in substantially the same manner as in Example 1 except that the plasticizer (2) used in Example 5 was changed to a plasticizer (D-6) ("ADKCIZER C-8", manufactured by ADEKA Corporation; trimellitate plasticizer).

(Example 10: Production and evaluation of an aqueous resin composition (10))

Into the same reaction vessel as used in Synthesis Example 1 were charged 36 parts by mass of PnP, 80 parts by mass of IPA, 32 parts by mass of PTMS, 19 parts by mass of DMDMS, and 5 parts by mass of a plasticizer (D-1), and the temperature of the resultant mixture was increased to 80°C. Then, a mixture containing 99 parts by mass of MMA, 86 parts by mass of BMA, 67 parts by mass of BA, 16 parts by mass of AA, 5 parts by mass of MPTS, 14 parts by mass of PnP, and 14 parts by mass of TBPEH was dropwise added to the reaction vessel at the same temperature over 4 hours, and, after completion of the addition, further the resultant mixture was subjected to reaction at the same temperature for 2 hours, obtaining a polymer (a'-10) containing a plasticizer, and having both a carboxyl group and a hydrolyzable group bonded to a silicon atom and having a number average molecular weight of 18,000. Then, a mixture of 0.9 part by mass of a catalyst (1) and 24 parts by mass of deionized water was dropwise added to the obtained polymer over 5 minutes, and further the resultant mixture was stirred at the same temperature for 10 hours to perform a hydrolysis condensation reaction, obtaining a composite resin (A'B-10) having a polymer segment having both a carboxyl group and a hydrolyzable group bonded to a silicon atom, and a polysiloxane segment derived from PTMS and DMDMS. Then, 124 parts by mass of the methyltrimethoxysilane condensation product (c-1) was added to the obtained

composite resin to perform a hydrolysis condensation reaction, obtaining a reaction mixture containing a composite resin having the composite resin (A'B-10) and a polysiloxane segment derived from the methyltrimethoxysilane condensation product (c-1), which are bonded to each other. Subsequently, 9.9 parts by mass of DMEA was added to neutralize a carboxyl group in the composite resin (A'Bc-10) to obtain a composite resin (ABC-10), and then 580 parts by mass of deionized water was added to disperse the composite resin in an aqueous medium. Then, the resultant reaction mixture was subjected to distillation under conditions with a reduced pressure of 40 to 1.3 kPa and at a temperature of 40 to 60°C for 2 hours to remove the formed methanol, IPA and water, obtaining 1,000 parts by mass of an aqueous resin composition (10') having a nonvolatile content of 40.0% by weight.

100 Parts by mass of the aqueous resin composition (10') and 7 parts by mass of GPTMS were uniformly mixed with each other to obtain an aqueous resin composition (10).

(Example 11: Production and evaluation of an aqueous resin composition (11))

Into the same reaction vessel as used in Synthesis Example 1 were charged 493 parts of the composite resin (A'B-2) obtained in Synthesis Example 3 and 5 parts by mass of a plasticizer (D-1), and the resultant mixture was stirred, and then 124 parts by mass of the methyltrimethoxysilane condensation product (c-1) was added to the mixture to perform a hydrolysis condensation reaction, obtaining a reaction mixture containing a composite resin having the composite resin (A'B-11) and a polysiloxane segment derived from the methyltrimethoxysilane condensation product (c-1), which are bonded to each other, and a plasticizer. Then, 9.9 parts by mass of DMEA was added to neutralize a carboxyl group in the composite resin (A'Bc-11) to obtain a composite resin (ABC-11), and then 580 parts by mass of deionized water was added to disperse the composite resin in an aqueous medium. Then, the resultant reaction mixture was subjected to distillation under conditions with a reduced pressure of 40 to 1.3 kPa and at a temperature of 40 to 60°C for 2 hours to remove the formed methanol, IPA and water, obtaining an aqueous resin composition (11') containing a composite resin including a plasticizer, and having a nonvolatile content of 40.0% by weight.

100 Parts by mass of the aqueous resin composition (11') and 7 parts by mass of GPTMS were uniformly mixed with each other to obtain an aqueous resin composition (11).

(Example 12: Production and evaluation of an aqueous resin composition (12))

An aqueous resin composition (12) was obtained in substantially the same manner as in Example 1 except that the composite resin (ABC-1) used in Example 1 was changed to a composite resin (ABC-2), and that 5 parts by mass of the plasticizer (1) was changed to 1 part by mass of a plasticizer (D-3).

(Example 13: Production and evaluation of an aqueous resin composition (13))

An aqueous resin composition (13) was obtained in substantially the same manner as in Example 1 except that the composite resin (ABC-1) used in Example 1 was changed to a composite resin (ABC-2), and that 5 parts by mass of the plasticizer (1) was changed to 10 parts by mass of a plasticizer (D-3) .

(Example 14: Production and evaluation of an aqueous resin composition (14))

An aqueous resin composition (14) was obtained in substantially the same manner as in Example 1 except that the composite resin (ABC-1) used in Example 1 was changed to a composite resin (ABC-2), and that 5 parts by mass of the plasticizer (D-1) was changed to 30 parts by mass of a plasticizer (3).

(Example 15: Production and evaluation of an aqueous resin composition (15))

An aqueous resin composition (15) was obtained in substantially the same manner as in Example 1 except that the composite resin (ABC-1) used in Example 1 was changed to a composite resin (ABC-2), and that 5 parts by mass of the plasticizer (D-1) was changed to 50 parts by mass of a plasticizer (3).

[Preparation of a pigment dispersion]

47 Parts by mass of water, 12 parts by mass of "DISPERBYK-190", manufactured by BYK Japan K.K., 140 parts by mass of "Ti-Pure R-706", manufactured by Chemours-Mitsui Fluoroproducts Co., Ltd., and "GB201", manufactured by Potters-Ballotini Co., Ltd., were charged into an exclusive pot for a sand mill (Grind to Hegman 8), and kneaded under conditions at 25°C and at 3,000 rpm for 30 minutes to obtain a pigment dispersion (1).

(Example 16: Production and evaluation of an aqueous resin composition (16))

66.6 Parts by mass of the pigment dispersion (1), 100 parts by mass of the aqueous dispersion of the composite resin (ABC-2) obtained in Synthesis Example 2, 5 parts by mass of a plasticizer (D-2), and 5.3 parts by mass of GPTMS were uniformly mixed with each other to obtain an aqueous resin composition (16).

(Example 17: Production and evaluation of an aqueous resin composition (17))

66.6 Parts by mass of the pigment dispersion (1), 100 parts by mass of the aqueous dispersion of the composite resin (ABC-2) obtained in Synthesis Example 2, 20 parts by mass of a plasticizer (D-2), and 5.3 parts by mass of GPTMS were uniformly mixed with each other to obtain an aqueous resin composition (17).

(Comparative Example 1: Production and evaluation of an aqueous resin composition (R1))

An aqueous resin composition (R1) was obtained in substantially the same manner as in Example 1 except that the composite resin (ABC-1) used in Example 1 was changed to a composite resin (ABC-2), and that the plasticizer (D-1) was not used.

(Comparative Example 2: Production and evaluation of an aqueous resin composition (R2))

An aqueous resin composition (R2) was obtained in substantially the same manner as in Example 1 except that the composite resin (ABC-1) used in Example 1 was changed to a composite resin (ABC-2), and that, instead of 5 parts by mass of the plasticizer (D-1), 10 parts by mass of diethylene glycol monobutyl ether (hereinafter, referred to simply as "BDG") was used.

(Comparative Example 3: Production and evaluation of an aqueous resin composition (R3))

An aqueous resin composition (R3) was obtained in substantially the same manner as in Example 16 except that, instead of 5 parts by mass of the plasticizer (D-2) used in Example 16, 10 parts by mass of BDG was used.

(Comparative Example 4: Production and evaluation of an aqueous resin composition (R4))

An aqueous resin composition (R4) was obtained in substantially the same manner as in Example 14 except that the composite resin (ABC-2) used in Example 14 was changed to a composite resin (ABC-5).

(Comparative Example 5: Production and evaluation of an aqueous resin composition (R5))

An aqueous resin composition (R5) was obtained in substantially the same manner as in Example 14 except that the composite resin (ABC-2) used in Example 14 was changed to a composite resin (ABC-10), and that 5.3 parts by mass of GPTMS was changed to 4.5 parts by mass of GPTMS.

[Method for preparing a cured coating film X for evaluation]

An acryl-urethane white coating composition was applied to a chromate-treated aluminum plate, manufactured by Engineering Test Service Co., Ltd., and then subjected to wet sanding, and the above-obtained aqueous resin composition was applied to the resultant substrate so that the dried film had a thickness of 30 μm, and dried in an environment at 25°C for one week to obtain a cured coating film X for evaluation.

[Method for preparing a cured coating film Y for evaluation]

The above-obtained aqueous resin composition was applied to a glass plate, manufactured by Engineering Test Service Co., Ltd., so that the dried film had a thickness of 30 μm, and dried in an environment at 5°C for 24 hours to obtain a cured coating film Y for evaluation.

[Evaluation of the appearance of the coating film]

The above-obtained cured coating film X for evaluation was visually observed, and the appearance of the coating film was evaluated in accordance with the following criteria.

A: No crack is found.
B: A slight crack is found.
C: A crack is found.

[Evaluation of the adhesion]

With respect to the above-obtained cured coating film X for evaluation, measurement was conducted according to the method of JIS K-5600 lattice pattern cutting test. A lattice pattern with a width of 1 mm was cut in the cured coating film using a cutter so that the number of lattices in the cut lattice pattern became 100, and a cellophane adhesive tape was put on the coating film so as to cover all the lattices, and quickly peeled off and the number of the lattices that still adhered to the substrate was counted, and the adhesion was evaluated in accordance with the following criteria.

A: No peeling.
B: Peeling area is 1 to 64% of the area of the all lattices.
C: Peeling area is 65% or more of the area of the all lattices.

[Evaluation of the hot-water resistance (appearance)]

The above-obtained cured coating film X for evaluation was immersed in hot water at 50°C for 7 days, and then taken out of the hot water, and the appearance of the cured coating film immediately after taken out of the hot water was visually observed and evaluated in accordance with the criteria 1 below. With respect to the aqueous resin compositions (16) and (17), the coating film obtained from each composition was white even before immersed in hot water, and therefore was evaluated in accordance with the criteria 2 below.

(Criteria 1)

A: No whitening is found.
B: Whitening is found.
C: Peeling from the substrate is found.

(Criteria 2)

A: Gloss holding ratio is 80% or more.
B: Gloss holding ratio is 40 to less than 80%.
C: Gloss holding ratio is less than 40%.

Specular reflectance values of the coating film before and after the water resistance test were measured using micro-tri-gloss, manufactured by BYK Japan K.K., and a gloss holding ratio was determined from them according to the following formula. The larger the value of gloss holding ratio, the more excellent the water resistance.

$$\text{Gloss holding ratio (\%)} = 100 \times (\text{Specular reflectance of the coating film after the water resistance test})/(\text{Specular reflectance of the coating film before the water resistance test})$$

[Evaluation of the hot-water resistance (adhesion)]

The above-obtained cured coating film for evaluation was immersed in hot water at 50°C for 7 days, and then taken out of the hot water and allowed to stand for one hour. Then, a lattice pattern with a width of 1 mm was cut in the resultant coating film using a cutter so that the number of lattices in the cut lattice pattern became 100, and a cellophane adhesive tape was put on the coating film so as to cover all the lattices, and quickly peeled off and the number of the lattices that still adhered to the substrate was counted, and the hot-water resistance was evaluated in accordance with the following criteria.

A: No peeling.
B: Peeling area is 1 to 64% of the area of the all lattices.
C: Peeling area is 65% or more of the area of the all lattices.

[Evaluation of the water resistance (of the film formed at a low temperature)]

The above-obtained cured coating film Y for evaluation was immersed in water at 25°C for 24 hours, and then taken out of the water, and the appearance of the cured coating film immediately after taken out of the water was visually observed and evaluated in accordance with the criteria 1 below. With respect to the aqueous resin compositions (16) and (17), the coating film obtained from each composition was white even before immersed in water, and therefore was evaluated in accordance with the criteria 2 below.

(Criteria 1)

A: No whitening is found.
B: Partial whitening is found.
C: Peeling from the substrate is found.

(Criteria 2)

A: Gloss holding ratio is 80% or more.
B: Gloss holding ratio is 40 to less than 80%.
C: Gloss holding ratio is less than 40%.

[Evaluation of the solvent resistance]

With respect to the above-obtained cured coating film for evaluation, using felt soaked with ethanol, the cured coating film was rubbed 50 times in terms of a back-and-forth cycle, and then the state of the resultant cured coating film was examined by touching it with fingers and visually observed, and evaluated in accordance with the following criteria.

A: Neither softening nor gloss lowering is found.
B: Slight softening or gloss lowering is found.
C: Marked softening or gloss lowering is found.

[Evaluation of the acid resistance]

With respect to the above-obtained cured coating film for evaluation, a part of the cured coating film was immersed in a 5% aqueous solution of sulfuric acid, and allowed to stand at 25°C for 7 days, and then the cured coating film was washed with water, and dried and then the state of the surface of the dried cured coating film was visually observed, and evaluated in accordance with the following criteria.

A: Etching mark is found.
B: Slight etching mark is found.
C: Marked etching is found.

[Evaluation of the weathering resistance (appearance)]

The above-obtained cured coating film for evaluation was subjected to 1,000-hour exposure using Dew-panel Light Weather Meter (manufactured by Suga Test Instruments Co, Ltd.; at the time of light irradiation: 30 W/m2, 70°C; at the time of wetting: humidity: 90% or more, 50°C; light irradiation/wetting cycle = 8 hours/4 hours), and then the resultant coating film was visually observed, and the appearance of the coating film was evaluated in accordance with the following criteria.

A: No crack is found.
B: A slight crack is found.
C: A crack is found.

[Evaluation of the weathering resistance (gloss holding ratio)]

A specular reflectance (gloss value) (%) of the cured coating film for evaluation immediately after prepared was measured, and evaluation was made for a holding ratio (gloss holding ratio: %) of a specular reflectance (gloss value) (%) of the cured coating film, which had been subjected to 1,000-hour exposure using Dew-panel Light Weather Meter (manufactured by Suga Test Instruments Co, Ltd.; at the time of light irradiation: 30 W/m2, 70°C; at the time of wetting: humidity: 90% or more, 50°C; light irradiation/wetting cycle = 8 hours/4 hours), to a specular reflectance (gloss value) of the cured coating film before the exposure [(100 × Specular reflectance of the coating film after the exposure)/(Specular reflectance of the cured coating film before the exposure)]. The larger the value of holding ratio, the more excellent the weathering resistance. A specular reflectance was measured using micro-tri-gloss, manufactured by BYK Japan K.K.

[Evaluation of the stain resistance]

The above-obtained cured coating film for evaluation was subjected to exposure for 3 months in the Sakai Plant of DIC Corporation, Takaishi-shi, Osaka. A color difference ($\Delta E$) between the uncleaned coating film after the exposure test and the coating film before the exposure test was evaluated using "CM-3500d", manufactured by Konica Minolta Japan, Inc. The smaller the color difference ($\Delta E$), the more excellent the stain resistance.

[Evaluation of the bleed resistance]

The above-obtained cured coating film for evaluation was allowed to stand in an atmosphere at 70°C and at a relative humidity of 95% for one month, and then the state of the surface of the resultant cured coating film was evaluated by touching it with fingers as to whether bleeding of the plasticizer occurred or not. Criteria for the evaluation were as follows.

A: No bleeding.
B: Slight bleeding is found.
C: Marked bleeding is found.

[Evaluation of the substrate followability]

As evaluation of the substrate followability, an elongation of a coating film was measured.

(Method for measuring an elongation of a coating film)

The above-obtained aqueous resin composition was applied onto a substrate formed from a polypropylene film so that the resultant film had a thickness of 200 μm, and dried in an environment at 140°C for 5 minutes, and then further dried in an environment at 25°C for 24 hours, and the resultant film was peeled off from the substrate and used as a test coating film (10 mm × 70 mm) .

The measurement of an elongation of the test coating film was conducted using "Autograph AGS-1kNG", manufactured by Shimadzu Corporation (distance between chucks: 20 mm; pulling rate: 300 mm/minute; measurement atmosphere: 22°C, 60% RH), and evaluation was made in terms of the elongation rate relative to the coating film before the tensile test. The elongation is preferably 20% or more from a practical point of view.

The results of the evaluation in Examples 1 to 4 above are shown in Tables 1 to 4.

[Table 1]

| Table 1 | Example 1 | Example 2 | Example 3 | Example 4 |
|---|---|---|---|---|
| Aqueous resin composition | (1) | (2) | (3) | (4) |

(continued)

| Table 1 | | Example 1 | Example 2 | Example 3 | Example 4 |
|---|---|---|---|---|---|
| Formulation (Parts by mass) | Aqueous dispersion of composite resin (ABC-1) | 100 | | | |
| | Aqueous dispersion of composite resin (ABC-2) | | 100 | | |
| | Aqueous dispersion of composite resin (ABC-3) | | | 100 | |
| | Aqueous dispersion of composite resin (ABC-4) | | | | 100 |
| | Plasticizer (D-1) | 5 | 5 | 5 | 5 |
| | GPTMS | 4 | 4 | 4 | 4 |
| Mass% of polysiloxane segment in composite resin | | 20 | 30 | 50 | 80 |
| Evaluation of coating film | Appearance of coating film | A | A | A | A |
| | Adhesion | A | A | A | A |
| | Hot-water resistance (Appearance) | A | A | A | A |
| | Hot-water resistance (Adhesion) | A | A | A | A |
| | Water resistance (Film formed at low temperature) | A | A | A | A |
| | Solvent resistance | A | A | A | A |
| | Acid resistance | A | A | A | A |
| | Weathering resistance (Appearance) | A | A | A | A |
| | Weathering resistance (Gloss holding ratio (%)) | 92 | 94 | 93 | 94 |
| | Stain resistance (Color difference ΔE) | 2.1 | 2.0 | 2.0 | 1.8 |
| | Bleed resistance | A | A | A | A |
| | Substrate followability (Elongation % of coating film) | 85 | 75 | 66 | 42 |

[Table 2]

| Table 2 | | Example 5 | Example 6 | Example 7 | Example 8 | Example 9 |
|---|---|---|---|---|---|---|
| Aqueous resin composition | | (5) | (6) | (7) | (8) | (9) |
| Formulation (Parts by mass) | Aqueous dispersion of composite resin (ABC-2) | 100 | 100 | 100 | 100 | 100 |
| | Plasticizer (D-2) | 5 | | | | |
| | Plasticizer (D-3) | | 5 | | | |
| | Plasticizer (D-4) | | | 5 | | |
| | Plasticizer (D-5) | | | | 5 | |
| | Plasticizer (D-6) | | | | | 5 |
| | GPTMS | 5.3 | 5.3 | 5.3 | 5.3 | 5.3 |

(continued)

| Table 2 | | Example 5 | Example 6 | Example 7 | Example 8 | Example 9 |
|---|---|---|---|---|---|---|
| Mass% of polysiloxane segment in composite resin | | 30 | 30 | 30 | 30 | 30 |
| Evaluation of coating film | Appearance of coating film | A | A | A | A | A |
| | Adhesion | A | A | A | A | A |
| | Hot-water resistance (Appearance) | A | A | A | A | A |
| | Hot-water resistance (Adhesion) | A | A | A | A | A |
| | Water resistance (Film formed at low temperature) | A | A | B | B | B |
| | Solvent resistance | A | A | A | A | A |
| | Acid resistance | A | A | A | A | A |
| | Weathering resistance (Appearance) | A | A | A | A | A |
| | Weathering resistance (Gloss holding ratio (%)) | 96 | 95 | 93 | 93 | 94 |
| | Stain resistance (Color difference ΔE) | 1.9 | 2.0 | 2.0 | 2.0 | 1.9 |
| | Bleed resistance | A | A | A | A | A |
| | Substrate followability (Elongation % of coating film) | 78 | 75 | 82 | 80 | 58 |

[Table 3]

| Table 3 | | Example 10 | Example 11 | Example 12 | Example 13 |
|---|---|---|---|---|---|
| Aqueous resin composition | | (10) | (11) | (12) | (13) |
| Formulation (Parts by mass) | Aqueous dispersion of composite resin (ABC-2) | | | 100 | 100 |
| | Aqueous dispersion of composite resin (ABC-10), containing plasticizer (1) in amount of 5 mass% | 100 | | | |
| | Aqueous dispersion of composite resin (ABC-11), containing plasticizer (1) in amount of 5 mass% | | 100 | | |
| | Plasticizer (D-3) | | | 1 | 10 |
| | GPTMS | 7 | 7 | 5.3 | 5.3 |
| Mass% of polysiloxane segment in composite resin | | 30 | 30 | 30 | 30 |

(continued)

| Table 3 | | Example 10 | Example 11 | Example 12 | Example 13 |
|---|---|---|---|---|---|
| Evaluation of coating film | Appearance of coating film | A | A | A | A |
| | Adhesion | A | A | A | A |
| | Hot-water resistance (Appearance) | A | A | A | A |
| | Hot-water resistance (Adhesion) | A | A | A | A |
| | Water resistance (Film formed at low temperature) | A | A | A | A |
| | Solvent resistance | A | A | A | A |
| | Acid resistance | A | A | A | A |
| | Weathering resistance (Appearance) | A | A | A | A |
| | Weathering resistance (Gloss holding ratio (%)) | 95 | 94 | 95 | 94 |
| | Stain resistance (Color difference ΔE) | 2.1 | 2.0 | 2.0 | 1.9 |
| | Bleed resistance | A | A | A | A |
| | Substrate followability (Elongation % of coating film) | 73 | 75 | 52 | 86 |

[Table 4]

| Table 4 | | Example 14 | Example 15 | Example 16 | Example 17 |
|---|---|---|---|---|---|
| Aqueous resin composition | | (14) | (15) | (16) | (17) |
| Formulation (Parts by mass) | Aqueous dispersion of composite resin (ABC-2) | 100 | 100 | 100 | 100 |
| | Pigment dispersion (1) | | | 66.6 | 66.6 |
| | Plasticizer (D-2) | | | 5 | 20 |
| | Plasticizer (D-3) | 30 | 50 | | |
| | GPTMS | 5.3 | 5.3 | 5.3 | 5.3 |
| Mass% of polysiloxane segment in composite resin | | 30 | 30 | 30 | 30 |

(continued)

| Table 4 | | Example 14 | Example 15 | Example 16 | Example 17 |
|---|---|---|---|---|---|
| Evaluation of coating film | Appearance of coating film | A | A | A | A |
| | Adhesion | A | A | A | A |
| | Hot-water resistance (Appearance) | A | A | A | A |
| | Hot-water resistance (Adhesion) | A | A | A | A |
| | Water resistance (Film formed at low temperature) | A | A | A | A |
| | Solvent resistance | A | A | A | A |
| | Acid resistance | A | A | A | A |
| | Weathering resistance (Appearance) | A | A | A | A |
| | Weathering resistance (Gloss holding ratio (%)) | 94 | 92 | 93 | 93 |
| | Stain resistance (Color difference ΔE) | 2.1 | 2.2 | 2.5 | 2.7 |
| | Bleed resistance | A | A | A | A |
| | Substrate followability (Elongation % of coating film) | 101 | 120 | 42 | 60 |

The results of the evaluation in Comparative Examples 1 to 5 above are shown in Table 5.

[Table 5]

| Table 5 | | Comparative Example 1 | Comparative Example 2 | Comparative Example 3 | Comparative Example 4 | Comparative Example 5 |
|---|---|---|---|---|---|---|
| Aqueous resin composition | | (R1) | (R2) | (R3) | (R4) | (R5) |
| Formulation (Parts by mass) | Aqueous dispersion of composite resin (ABC-2) | 100 | 100 | 100 | | |
| | Aqueous dispersion of composite resin (ABC-5) | | | | 100 | |
| | Aqueous dispersion of composite resin (ABC-6) | | | | | 100 |
| | Pigment dispersion (1) | | | 66.6 | | |
| | Plasticizer (D-3) | | | | 30 | 30 |
| | BDG | | 10 | 10 | | |
| | GPTMS | 5.3 | 5.3 | 5.3 | 5.3 | 4.6 |
| Mass% of polysiloxane segment in composite resin | | 30 | 30 | 30 | 12 | 90 |

(continued)

| Table 5 | | Comparative Example 1 | Comparative Example 2 | Comparative Example 3 | Comparative Example 4 | Comparative Example 5 |
|---|---|---|---|---|---|---|
| Evaluation of coating film | Appearance of coating film | B | A | A | A | A |
| | Adhesion | A | A | A | A | A |
| | Hot-water resistance (Appearance) | A | A | A | A | A |
| | Hot-water resistance (Adhesion) | A | A | A | A | A |
| | Water resistance (Film formed at low temperature) | C | C | C | C | C |
| | Solvent resistance | A | A | A | B | B |
| | Acid resistance | A | A | A | B | B |
| | Weathering resistance (Appearance) | A | A | A | C | C |
| | Weathering resistance (Gloss holding ratio (%)) | 94 | 93 | 95 | 36 | 54 |
| | Stain resistance (Color difference ΔE) | 2.1 | 2.0 | 2.7 | 6.2 | 3.5 |
| | Bleed resistance | A | A | A | A | A |
| | Substrate followability (Elongation % of coating film) | 2 | 17 | 5 | 74 | 16 |

It was found that, from the aqueous resin compositions in Examples 1 to 17 of the present invention, there was obtained a cured coating film which is excellent in various physical properties, such as appearance of the coating film, adhesion, hot-water resistance, water resistance, solvent resistance, acid resistance, weathering resistance, stain resistance, bleed resistance, and substrate followability.

Comparative Examples 1 to 3 are examples in which no plasticizer (D) is contained, and the obtained cured coating films were found to have unsatisfactory water resistance and substrate followability.

Comparative Example 4 is an example in which the content of the polysiloxane segment in the composite resin is smaller than 15% by mass which is the lower limit in the present invention, and the obtained cured coating film was found to have unsatisfactory water resistance, weathering resistance, and stain resistance.

Comparative Example 5 is an example in which the content of the polysiloxane segment in the composite resin is larger than 85% by mass which is the upper limit in the present invention, and the obtained cured coating film was found to have unsatisfactory water resistance, weathering resistance, and substrate followability.

## Claims

1. An aqueous resin composition having a composite resin (ABC) dissolved or dispersed in an aqueous medium, and further containing a plasticizer (D), the composite resin (ABC) having a polysiloxane segment (B) and a polysiloxane segment (C) which are bonded through a silicon-oxygen bond, wherein the polysiloxane segment (B) is present in a composite resin (AB) having a polymer segment (A) having a neutralized acid group and the polysiloxane segment (B), which are chemically bonded to each other, and the polysiloxane segment (C) is derived from a condensation product (c) of an alkyltrialkoxysilane having an alkyl group having 1 to 3 carbon atoms, wherein the content of the total of the polysiloxane segment (B) and the polysiloxane segment (C) in the composite resin (ABC) is 15 to 85% by mass.

2. The aqueous resin composition according to claim 1, wherein the polysiloxane segment (B) has a structure represented by the following general formula (1) and/or (2):

[Chem. 1]

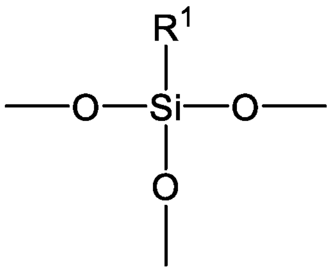

(1)

[Chem. 2]

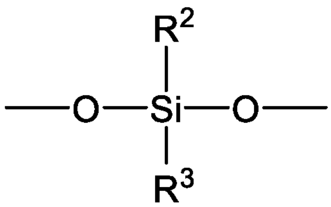

(2)

wherein, in the general formulae (1) and (2), $R^1$ is an organic group having 4 to 12 carbon atoms and being bonded to the silicon atom, and each of $R^2$ and $R^3$ is independently a methyl group bonded to the silicon atom or an ethyl group bonded to the silicon atom.

3. The aqueous resin composition according to claim 1 or 2, which contains 0.1 to 60 parts by mass of the plasticizer (D), relative to 100 parts by mass of the composite resin (ABC) .

4. A coating agent containing the aqueous resin composition according to any one of claims 1 to 3.

5. An article having a cured coating film of the coating agent according to claim 4.

**INTERNATIONAL SEARCH REPORT**

International application No. PCT/JP2019/023041

A. CLASSIFICATION OF SUBJECT MATTER
Int.Cl. C08L83/10(2006.01)i, C08G77/442(2006.01)i, C08G81/02(2006.01)i, C09D183/10(2006.01)i

According to International Patent Classification (IPC) or to both national classification and IPC

B. FIELDS SEARCHED

Minimum documentation searched (classification system followed by classification symbols)
Int.Cl. C08L83/10, C08G77/442, C08G81/02, C09D183/10

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2016-121268 A (DIC CORPORATION) 07 July 2016, entire text (Family: none) | 1-5 |
| A | JP 2010-090274 A (DIC CORPORATION) 22 April 2010, entire text (Family: none) | 1-5 |
| A | JP 11-279408 A (DAINIPPON INK AND CHEMICALS, INCORPORATED) 12 October 1999, entire text & US 6268440 B1, full text & WO 1998/055548 A1 & DE 19880901 B & KR 10-0630433 B1 | 1-5 |

☒ Further documents are listed in the continuation of Box C.　☐ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 04 September 2019 (04.09.2019) | 17 September 2019 (17.09.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2019/023041

C (Continuation). DOCUMENTS CONSIDERED TO BE RELEVANT

| Category* | Citation of document, with indication, where appropriate, of the relevant passages | Relevant to claim No. |
|---|---|---|
| A | JP 05-093071 A (ASAHI KASEI INDUSTRY CO., LTD.) 16 April 1993, entire text (Family: none) | 1-5 |
| A | JP 08-100035 A (SHOWA DENKO KABUSHIKI KAISHA) 16 April 1996, entire text (Family: none) | 1-5 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 11279408 A